# EUROPEAN PATENT APPLICATION

(11) **EP 1 096 731 A1**
(43) Date of publication of application: **02.05.2001**
(21) Application number: 99929727.8
(22) Date of filing: 07.07.1999
(51) Int. Cl.: H04L 12/28, H04L 12/56

(54) **TIME DIVISION MULTIPLEX TRANSMISSION SYSTEM, AND COMMUNICATION SYSTEM USING TIME DIVISION MULTIPLEX TRANSMISSION ACCESS METHOD**

(30) Priority: 09.07.1998 JP 19451998; 02.09.1998 JP 24767298; 17.09.1998 JP 26312598
(71) Applicant: NEC Corporation, Minato-ku, Tokyo 108-0014 (JP)
(72) Inventor: ISHIKAWA, Hajime, Tokyo 108-0014 (JP)
(74) Representative: Glawe, Delfs, Moll & Partner
(86) International application number: JP9903662
(87) International publication number: WO0003514

(57) **Abstract**

Four channel signals 3a to 3d are input into a transmitter unit 1. The channel signal 3a includes ATM cell-base flow, and is input into a channel identifier adding circuit 4, in which a HEC byte in PLOAM cell is inverted. As a result, the channel signal 3a is turned into a reference channel signal 3x. The reference channel signal 3x as well as the channel signals 3b to 3d is input into a multiplexing circuit 5, in which the reference channel signal 3x is time-division multiplexed in every bit. The thus multiplexed reference channel signal is transmitted as a time-division multiplexed transmission signal 6 to a channel identifying circuit 8 in a receiver unit 7, and then, is separated into channels. The channel identifying circuit 8 detects the reference channel signal among the four channel signals, based on the fact that HEC byte in PLOAM cell is inverted, and identifies other channel signals, based on a difference in a phase between the reference channel signal 3x and other channel signals. The thus identified channel signals are transmitted from the channel identifying circuit 8.

## Description

### FIELD OF THE INVENTION

The invention relates to a system of carrying out time-division multiplexing transmission, and more particularly to a communication system including a system of identifying a plurality of time-division multiplexed channels and a system of making time-division multiplex access.

### PRIOR ART

Many systems of identifying a channel have been suggested so far, for instance, in Japanese Patent Publication No. 6-103866, and Japanese Unexamined Patent Publications Nos. 8-56225 and 8-223182. For instance, Japanese Patent No. 2704106 (Japanese Unexamined Patent Publication No. 7-177136) has suggested a system of identifying a channel, in which frames used in an apparatus for multiplexing data signals for transmission, are synchronized with one another.

In the suggested system, CRC (cyclic redundancy check) operation is carried out per a channel, and results of the operation is added to data as a redundant bit. A transmitter establishes a reference channel by using a formation polynomial in the CRC operation which polynomial is different from polynomials used for other channels. A receiver identifies the reference channel by detecting a difference among the formation polynomials.

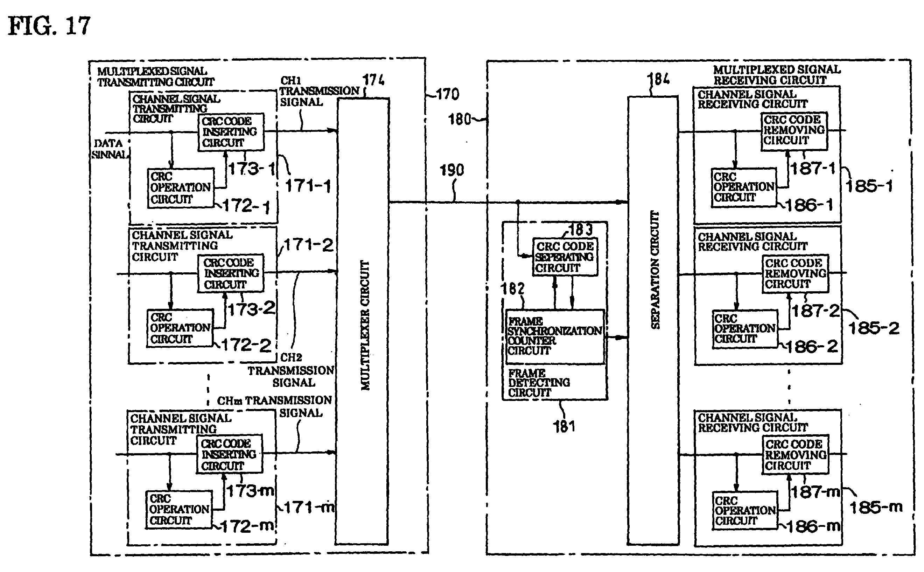

That is, as illustrated in Fig. 17, in a circuit 170 for transmitting multiplexed signals, among CRC operation circuits 172-1 to 172-m for calculating a CRC check bit to be added to a transmission signal in CRC code inserting circuits 173-1 to 173-m included in channel signal transmitting circuits 171-1 to 171-m, respectively, for instance, only the CRC operation circuit 172-1 uses a formation polynomial different from polynomials used in other channels.

A multiplexer circuit 174 time-division multiplexes transmission signals in all channels, to which a CRC check bit is added in the CRC code inserting circuits 173-1 to 173-m, to thereby produce multiplexed signals, and transmits the thus produced multiplexed signals to a multiplexed signal receiving circuit 180 through a transmission path 190.

The multiplexed signal receiving circuit 180 which receives multiplexed signals includes a frame detecting circuit 181 comprised of a frame synchronization counter circuit 182 and a CRC code separating circuit 183. The frame detecting circuit 181 carries out CRC operation at a certain phase of a frame through the use of the same formation polynomial as one used in the channel signal transmitting circuit 171-1. The frame detecting circuit 181 continues carrying out CRC operation with a phase of a frame being varied, until the phase of a frame resulted from the CRC operation becomes coincident with a bit pattern in a multiplexed signal, and thus, detects a frame-synchronized phase.

A separation circuit 184 separates, data from a multiplexed signal in accordance with the frame-synchronized phase detected in the frame detecting circuit 181, and transmits the thus separated data to channel signal receiving circuits 185-1 to 185-m. The channel signal receiving circuit 185-1 to 185-m are comprised of CRC operation circuits 186-1 to 186-m and CRC code removing circuits 187-1 to 187-m, respectively.

In the above-mentioned conventional system, the results of CRC operation have to be inserted into data in order to identify a channel. Hence, a redundant are used for identifying a channel has to be added to a transmitted data, resulting in a problem of an increase in a transmission capacity.

If a reference channel includes asynchronous transfer mode (ATM) cell-base flow, it is not necessary to prepare a redundant area used for identifying a channel, because ATM cell includes an area into which results of CRC operation are to be inserted, that is, a header error control (HEC) byte, in a header.

However, standard specification is defined with respect to a formation polynomial used for carrying out CRC operation in ATM cell. The conventional system is accompanied with a problem that if the above-mentioned conventional system is applied to the formation polynomial, the formation polynomial deviates out of the standard specification.

In addition, if a formation polynomial deviating out of the standard specification is used, there would be caused a problem that a harmful influence exerts on a quality of a signal, since a hamming distance is varied in detection of an error.

Time-division multiplexing is much applied to a communication system.

For instance, in a certain communication system, a plurality of subscriber terminals are connected to a terminal station unit through the same communication medium, and an access control in an ascending line directing to the terminal station unit from the subscriber terminals is carried out under a time-division multiplexing access system. A typical one in such a communication system is ATM-PON (Asynchronous Transfer Mode Passive Optical Network), for instance.

This is called ATM-PDS (ATM-Passive Double Star), which is briefly explained, for instance, in "ATM-PDS access system", NTT R&D, Vol. 14, No. 12, 1995, pp. 1157-1162.

A signal form, in particular, a frame structure of a signal is detailed in "Draft E of G.983 (EX G. PONB) as a result of the interim meeting in August 1997 and minor editorial changes", ITU-T, pp. 29-30.

ATM-PON is a broad range access system for multi-media, and carries out ATM communication at a sign rate of 156 Mbps in both ascending and descending lines. In ATM-PON, a terminal station unit and a plurality of subscriber terminals are connected to each other through a passive optical fiber network, and a wavelength-division multiplexing system in which optical signals having different wavelengths from each other are applied to ascending and descending lines in order to separate the ascending and descending lines from each other.

A communication is made logically one to one between the terminal station unit and the subscriber terminal. However, in the ascending line, if a plurality of the subscriber terminals concurrently transmits signals, ascending optical signals collide with one another at a branch of the passive optical fiber network. In order to avoid such collision, a timing at which each of the subscriber terminals transmits a signal is controlled by the time-division multiplexing access system.

A signal form adopted in ATM-PON is based on ATM cell. That is, ATM cell-base flow to which ATM cell is connected is used in a descending line, and a burst signal having a structure including an overhead used for synchronizing with ATM cell is used in an ascending line. Hence, in ATM-PON, conversion in a signal form is carried out in order to conform all signals to ATM signal form.

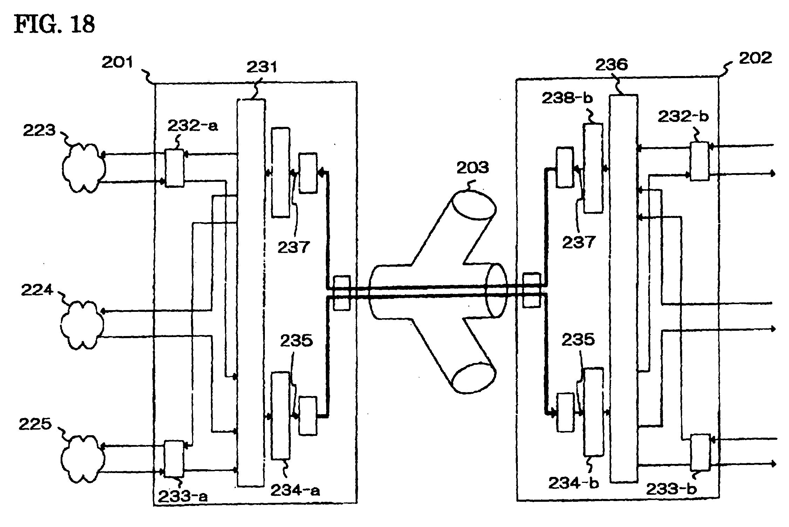

Fig. 18 is a block diagram illustrating a structure of ATM-PON.

A terminal station unit 201 and a plurality of subscriber terminals 202 are connected to each other through a passive optical fiber network 203. The terminal station unit 201 is connected to a STM network 223, an ATM network 224 and an Ether network 225. Signals transmitted from the ATM network 224 are input into an ATM exchange 231, whereas signals transmitted from the STM network 223 and the Ether network 225 are input into the ATM exchange 231 after being converted into ATM cells by means of a station CLAD 232-a and a station ATM interface 233-a.

The ATM exchange 231 transmits its output signal to a station ATM-PON descending signal transmitting circuit 234-a, which transmits an ATM-PON descending signal 235.

In the subscriber terminal 202, the ATM-PON descending signal 235 is terminated by a circuit 234-b which terminates a subscriber ATM-PON descending signal, and thus, ATM cell is identified. The thus identified ATM cell is separated into a cell including a STM signal, a cell received directly from the ATM network 224, and a cell storing an Ether packet by means of a multiplexing separation circuit 236. ATM cell including a STM signal and ATM cell including an Ether packet are input into a subscriber CLAD 232-b and a subscriber ATM interface 233-b, respectively, and then, converted into their original signal forms.

As illustrated in Fig. 18, in the ascending line, a STM signal and an Ether packet are transmitted after being converted into ATM cells. In the subscriber terminal 202, a STM signal and an Ether packet are converted into ATM cells in a CLAD 232-b and an ATM interface 233-b, respectively.

The multiplexing separation circuit 236 cell-multiplexes those signals having been converted into ATM cells, and transmits the thus multiplexed signals into a circuit 238-b which terminates a subscriber ATM-PON ascending signal. The circuit 238-b transmits an ascending signal in accordance with time-division multiplexing access control carried out by the terminal station unit 201, in order to store the ascending signal into an area assigned to the circuit in an ascending line.

However, it is necessary to convert all signals into ATM cells in ATM-PON. Hence, even if a telephone signal is to be received, ATM-PON needs to include CLAD, resulting in an increase in costs.

Furthermore, when a signal having a relatively low fixed bit rate such as a telephone signal is to be stored, almost all of data area in ATM cell is not used, which is quite ineffective.

In addition, when a packet having a variable length is to be stored, it is necessary to segment the packet so as to conform the packet into a length of ATM cell. Hence, it is necessary to define an interface for every signal form when the packet is segmented, resulting in a problem that it would be quite difficult to deal with a new signal form.

The present invention has been made in view of the above-mentioned problems in prior art. It is an object of the present invention to provide a time-division multiplexing system which is capable of accomplishing channel identification without addition of a redundant area and further without significant alternation in the specification of ATM cell-base flow to be stored in a channel, and to provide a channel identifying system used in the time-division multiplexing system.

It is also an object of the present invention to provide a communication system which shares a medium in communication and uses a time-division multiplexing access system in an ascending line, and which is capable of storing signals having various forms.

### DISCLOSURE OF THE INVENTION

In order to accomplish the above-mentioned object, the present invention provides a system for identifying a channel, to be used in a time-division multiplexing transmission system in which a plurality of channels are time-division multiplexed for transmission, characterized in that at least one of the channels stores asynchronous transfer mode (ATM) cell-base flow therein, a transmitter includes a deformer which deforms a physical layer operation administration management cell (PLOAM cell) cyclically inserted into the ATM cell-base flow, into an inherent form, the transmitter establishes a reference channel by means of the deformer, a recipient includes a first detector which detects the physical layer operation administration management cell having been deformed into an inherent form, the recipient identifies the reference channel by means of the first detector.

The transmitter may include a HEC byte inverter which inverts a HEC byte included in a header of the physical layer operation administration management cell, the recipient may include a second detector which detects the physical layer operation administration management cell having the thus inverted HEC byte, and the recipient may identify the reference channel by means of the second detector.

The channels may be time-division multiplexed by every bit or byte.

The present invention provides a system in which a plurality of channels are time-division multiplexed for transmission, characterized in that at least one of the channels stores asynchronous transfer mode (ATM) cell-base flow therein, a transmitter includes a transmitter unit having a channel identifier applying circuit which deforms a physical layer operation administration management cell in a channel storing the ATM cell-base flow, into an inherent form to produce a reference channel signal, and a multiplexing circuit which receives channel signals including the reference channel signal, time-division multiplexes the thus received channel signals, and transmits the thus multiplexed channel signals as multiplexed transmission signals, a recipient includes a receiver unit having a separating circuit which time-division separates the multiplexed transmission signals transmitted from the transmitter unit, and at least one reference channel detecting circuit which inputs one of a plurality of channel signals transmitted from the separating circuit, and detects whether the thus input channel signal includes a physical layer operation administration management cell having been deformed into an inherent form, to thereby detect a reference channel.

The channel identifier applying circuit may include a synchronizer for synchronizing with HEC of the physical layer operation administration management cell, and an inverter for inverting HEC of the physical layer operation administration management cell.

The reference channel detecting circuit may include a first unit which receives separated channels and carries out CRC operation, an ATM cell synchronizer for synchronizing with ATM cell in accordance with results of the operation carried out by the CRC operating unit, and a second unit which inverts HEC in the physical layer operation administration management cell and carries out CRC operation.

The reference channel detecting circuit may include an inconsistency detecting circuit which receives results of the operation carried out by the CRC operating unit and ATM cell synchronization signals transmitted from the ATM cell synchronizer, judges whether they are consistent with each other, and transmits an inconsistency detection signal when they are inconsistent with each other, and a reference channel judging circuit which receives the inconsistency detection signal and results of the operation carried out by the second unit, and detects a reference channel.

The receiver unit may be designed to receive a reference channel detection signal transmitted from the reference channel detecting circuit, and identifies other channels on the basis of a phase of the reference channel, and wherein the receiver unit includes a switch which switches a connection in accordance with results of identification of the other channels.

It is preferable that the inverter inverts a part of HEC of the physical layer operation administration management cell, in which case, the inverter may invert different parts of HEC from one another in the reference channel signals.

The present invention provides a method of identifying a channel, to be used in a time-division multiplexing transmission system in which a plurality of channels are time-division multiplexed for transmission, at least one of the channels storing asynchronous transfer mode (ATM) cell-base flow therein, the method including the steps of deforming a physical layer operation administration management cell (PLOAM cell) cyclically inserted into the ATM cell-base flow, into an inherent form to thereby establish a reference channel, the deforming being carried out by a transmitter, detecting the physical layer operation administration management cell having been deformed into an inherent form, to thereby identify the reference channel, the detecting being carried out by a recipient.

It is preferable that the method further includes the steps of inverting a HEC byte included in a header of the physical layer operation administration management cell, the inverting being carried out by the transmitter, and detecting the physical layer operation administration management cell having the thus inverted HEC byte, to thereby identify the reference channel, the detecting being carried out by the recipient.

The present invention provides a method of time-division multiplexing a plurality of channels for transmission, at least one of the channels storing asynchronous transfer mode (ATM) cell-base flow therein, the method including the first step of deforming a physical layer operation administration management cell in a channel storing the ATM cell-base flow, into an inherent form to produce a reference channel signal, the first step being carried out by a transmitter, the second step of receiving channel signals including the reference channel signal, time-division multiplexing the thus received channel signals, and transmitting the thus multiplexed channel signals as multiplexed transmission signals, the third step of time-division separating the time-division multiplexed transmission signals, the third step being carried out by a recipient, and the fourth step of inputting one of a plurality of channel signals transmitted in the third step, and judging whether the thus input channel signal includes the physical layer operation administration management cell having been deformed into an inherent form, to thereby detect a reference channel.

It is preferable that the first step includes the steps of synchronizing with HEC of the physical layer operation administration management cell, and inverting HEC of the physical layer operation administration management cell.

It is preferable that the fourth step includes receiving separated channels and carrying out CRC operation, synchronizing with ATM cell in accordance with results of the CRC operation, and inverting HEC in the physical layer operation administration management cell and carrying out CRC operation.

As an alternative, it is preferable that the fourth step includes judging whether the results of the CRC operation are inconsistent with the results of the step of synchronizing with ATM cell, and detecting a reference channel, based on the results of the judging step and the results of the CRC operation.

It is preferable that the method further includes the step of identifying other channels on the basis of a phase of the reference channel, and switching a connection in accordance with the results of identification of the other channels.

It is preferable that a part of HEC of the physical layer operation administration management cell is inverted in the step of inverting HEC of the physical layer operation administration management cell, in which case, it is preferable that different parts of HEC from one another are inverted in the reference channel signals.

In accordance with the present invention, a HEC byte in a physical layer operation administration management cell is inverted to thereby differentiate a specific ATM cell-base flow from a group of signals including other ATM cell-base flows, thereby establishing a reference channel. Hence, when a plurality of ATM cell-base flows stored in channels is to be transmitted, or even when other formats are added to the ATM cell-base flows, the reference channel could be readily identified.

In addition, it would be possible to identify other channels on the basis of a difference in phase between the reference channel and the other channels.

The present invention makes it no longer necessary to add a redundant area to data.

The channel identifying system and the time-division multiplexing transmission system both in accordance with the present invention are based on the standard specification for ATM cell-base flow transmission. Accordingly, even if there is used an apparatus used for time-division multiplexing transmission, it would be possible to use stock items, ensuring that the apparatus can be fabricated in low fabrication costs.

The present invention provides a system for identifying a channel, to be used in a time-division multiplexing transmission system in which a plurality of channels are time-division multiplexed for transmission, characterized in that at least one of the channels stores asynchronous transfer mode (ATM) cell-base flow therein, and characterized by a transmitter unit including a channel identifier adder which is formed in a cell header of a channel storing the ATM cell-base flow, and which deforms a HEC byte indicative of data used for detecting and correcting an error in transmitted data, into an inherent form to thereby produce a reference channel signal, and a multiplexer which time-division multiplexes channel signals including the reference channel signal, and transmits the thus multiplexed channel signals as time-division multiplexed signals, and a receiver unit including at least one separator which time-division separates the time-division multiplexed signals, and at least one reference channel detector which detects a reference channel signal including the HEC byte, among a plurality of channel signals produced by the separator.

The channel identifier adder may include a synchronizer which synchronizes the channel signals with one another, based on the HEC byte, and a modulo 2 adder which modulo-2 adds an inherent bit pattern to the HEC byte.

It is preferable that the reference channel detector includes a modulo-2 adder and CRC operator which modulo-2 adds the inherent bit pattern to the HEC byte, and carries out cyclic redundancy check (CRC) operation to the HEC byte.

The system may further include a plurality of reference channel detectors, each of the reference channel detectors being comprised of an input terminal through which an associated inherent bit pattern is input, and a modulo-2 adder and CRC operator which modulo-2 adds the inherent bit pattern input through the input terminal, to the HEC byte, and carries out cyclic redundancy check operation to the HEC byte.

The present invention provides a system for identifying a channel, to be used in a time-division multiplexing transmission system in which a plurality of channels are time-division multiplexed for transmission, characterized in that at least one of the channels stores asynchronous transfer mode (ATM) cell-base flow therein, a transmitter deforms a HEC byte into an inherent form to thereby produce a reference channel, the HEC byte being formed in a cell header of a channel storing the ATM cell-base flow, and being indicative of data used for detecting and correcting an error in transmitted data, a receiver detects the reference channel signal including the HEC byte having been deformed into the inherent form.

It is preferable that the transmitter modulo-2 adds an inherent bit pattern to the HEC byte.

It is preferable that the recipient establishes synchronization with respect to a cell with the HEC byte to which the inherent bit pattern has been modulo-2 added, to thereby identify the reference channel.

The recipient may select a channel, based on the detected reference channel.

The transmitter modulo-2 may add an inherent bit pattern to the HEC byte.

The recipient may establish synchronization with respect to a cell with the HEC byte to which the inherent bit pattern has been modulo-2 added, to thereby identify the reference channel, and alter the inherent bit pattern to thereby select a desired channel.

The present invention provides a method of identifying a channel, to be used in a time-division multiplexing transmission system in which a plurality of channels are time-division multiplexed for transmission, at least one of the channels stores asynchronous transfer mode (ATM) cell-base flow therein, the method including the first step of deforming a HEC byte into an inherent form to thereby produce a reference channel, the HEC byte being formed in a cell header of a channel storing the ATM cell-base flow, and being indicative of data used for detecting and correcting an error in transmitted data, the first step being carried out by a transmitter, the second step of time-division multiplexing channel signals including the reference signal, and producing a time-division multiplexed signal, the second step being carried out by the transmitter, the third step of time-division separating the time-division multiplexed signal, the third step being carried out by a recipient, and the fourth step of detecting a reference channel signal including the HEC byte, among a plurality of channel signals produced in the third step, the fourth step being carried out by the recipient.

The first step may include the steps of synchronizing the channel signals with one another, based on the HEC byte, and modulo-2 adding an inherent bit pattern to the HEC byte.

The fourth step may include the steps of modulo-2 adding the inherent bit pattern to the HEC byte, and carrying out cyclic redundancy check (CRC) operation.

The present invention provides a method of identifying a channel, to be used in a tune-division multiplexing transmission system in which a plurality of channels are time-division multiplexed for transmission, at least one of the channels stores asynchronous transfer mode (ATM) cell-base flow therein, the method including the first step of deforming a HEC byte into an inherent form to thereby produce a reference channel, the HEC byte being formed in a cell header of a channel storing the ATM cell-base flow, and being indicative of data used for detecting and correcting an error in transmitted data, the first step being to be carried out by a transmitter, and the second step of detecting the reference channel signal including the HEC byte having been deformed into the inherent form, the second step being to be carried out by a recipient.

It is preferable that the first step includes the step of modulo-2 adding an inherent bit pattern to the HEC byte.

It is preferable that the second step includes the step of establishing synchronization with respect to a cell with the HEC byte to which the inherent bit pattern has been modulo-2 added, to thereby identify the reference channel.

It is preferable that the second step includes the step of selecting a channel, based on the detected reference channel.

It is preferable that the second step includes the steps of establishing synchronization with respect to a cell with the HEC byte to which the inherent bit pattern has been modulo-2 added, to thereby identify the reference channel, and altering the inherent bit pattern to thereby select a desired channel.

In accordance with the present invention, it would be possible to identify a specific ATM cell-base flow by modulo-2 adding an inherent bit pattern to a HEC byte in an ATM cell header.

Accordingly, when a plurality of ATM cell-base flows stored in channels is to be transmitted, or even when a signal including other formats as well as ATM cell-base flow is to be transmitted, a HEC byte in a specific ATM cell-base flow can be used as a reference channel by deforming the HEC byte in the above-mentioned manner.

A recipient can readily identify the reference channel, and can identify other channels on the basis of a difference in phase between the reference channel and the other channels.

When ATM cell-base flow is to be stored in all channels, it would be possible to individually identify channels by independently associate an inherent bit pattern which is to be modulo-2 added to a HEC byte, with each one of channels.

Thus, in accordance with the present invention, it is no longer necessary to add a redundant area to data, and it is now possible to identify a reference channel on the basis of the standard specification adopted in an ATM cell-base flow system. This ensures that stock items can be used and a system can be built with a lower fabrication cost.

The present invention provides a communication system in which a plurality of subscriber terminals are connected to a terminal station unit through the same communication medium, and an access control to an ascending line directing toward the terminal station unit from the subscriber terminals is carried out in time-division multiplexing access, characterized in that the ascending line has a frame having a fixed length, the frame is divided into a plurality of ascending sub-frames, and each of the ascending sub-frames is comprised of a time-slot having a length inherent to each of the ascending sub-frames.

In the communication system in accordance with the present invention, a frame having a fixed length is set in an ascending line, and the frame is divided into a plurality of ascending sub-frames. In the communication system, ascending signals having different signal forms are stored in individual ascending sub-frames. Hence, the present invention makes it possible to store ascending signals having different signal forms, without exertion of any influence on one another.

In the communication system, each of the ascending sub-frames is comprised of a time-slot having a length inherent to itself. By optimizing a length of a time-slot in accordance with a signal form of a signal to be stored, it would be possible to store ascending signals having different signal forms, without wastage of a band.

It is preferable that the terminal station unit switches an apparatus for terminating an ascending signal, in every one of the ascending sub-frames.

Thus, it is possible to separate ascending signals having different forms, stored in an ascending line, into individual ascending signals, and terminate the thus separated ascending signals.

It is preferable that a time-slot located at a fixed position in the ascending sub-frame is assigned to each one of the subscriber terminals, and a synchronous transfer mode signal is stored in the time-slot in at least one of the ascending sub-frames, in which case, it is preferable that the time-slot has a length equal to a sum of a length of a signal transmitted by the synchronous transfer mode signal during one frame, and a length of a header associated with an ascending signal.

Thus, it is no longer necessary to use an identifier of a subscriber terminal, and hence, it would be possible to simplify a structure of the system, simplify a method of processing signals, and effectively use a band.

It is preferable that a cell having a fixed length is stored into the time-slot in at least one of the ascending sub-frames.

Since a cell having a fixed length is stored in a time-slot having a fixed length, a cell having a fixed length can be stored in a time-slot without wastage of a band.

It is preferable that a packet having a variable length is stored into an area comprised of a plurality of time-slots connected to one another, in at least one of the ascending sub-frames.

Thus, it is possible to provide an area in accordance with a length of a packet having a variable length. Accordingly, it is possible to store a packet having a variable length, without wastage of a band.

It is preferable that a descending line directing to the subscriber terminals from the terminal station unit has an descending line frame having a length equal to a length of the frame of the ascending line, the descending line has access control areas for each one of the ascending sub-frames wherein assignment of a time-slot in each of the ascending sub-frames to the subscriber terminals is written in the access control area, and the access control area is inserted into a predetermined position in the descending line frame which position corresponds to a position in the ascending line frame in which a head of an ascending sub-frame is positioned.

A phase of a frame in the descending line and a position of the access control area in a frame in the descending line give a phase of a frame in the ascending line and a boundary between ascending sub-frames in the frame. Accordingly, it would be possible to readily control the ascending line.

It is preferable that an area other than the access control area is divided into a plurality of descending sub-frames in the descending line frame, and an area in which a position of an boundary between the descending sub-frames is written is inserted into the descending line frame in a predetermined position.

The descending sub-frames ensure independence in a descending line among descending signals having different forms.

It is preferable that the access control area is inserted into different positions in the descending line frames to thereby have each of the ascending sub-frames had different lengths from one another.

It would be possible to establish a boundary among the ascending sub-frames in the ascending line by varying a position of the access control area in a frame of the descending line.

It is preferable that a descending line directing to the subscriber terminals from the terminal station unit has a descending line frame having a length equal to a length of the frame of the ascending line, and an ascending line control area is inserted into a predetermined position in the descending line frame, the ascending line control area including an access control area in which assignment of a time-slot in each of the ascending sub-frames to the subscriber terminals is written, and an area in which a position of an boundary between the descending sub-frames in the ascending line is written.

It is preferable that an area other than the ascending line control area is divided into a plurality of descending sub-frames in the descending line frame, and an area in which a position of an boundary between the descending sub-frames is written is inserted into the descending line frame in a predetermined position.

The descending sub-frames ensure independence in a descending line among descending signals having different forms.

It is preferable that a descending line directing to the subscriber terminals from the terminal station unit has a descending line frame having a length equal to a length of the frame of the ascending line, the descending line frame has a sign rate equal to a sign rate of the ascending line multiplied by N wherein N is a positive integer, the descending line is comprised of N channels each having a sign rate equal to a sign rate of the ascending line, one of the N channels having a function of making access to the ascending line.

By constructing the descending line as mentioned above, it would be possible to perfectly separate signals used for access control and data signals from each other, and to readily transmit a signal to be transmitted only through a descending line, such as a signal for broadcasting, in the descending line.

### BRIEF DESCRIPTION OF THE DRAWINGS

Fig. 1 is a block diagram illustrating a structure of a time-division multiplexing transfer system in accordance with the first embodiment of the present invention.
Fig. 2 (A) and (B) illustrate signal formats in the first embodiment illustrated in Fig. 1.
Fig. 3 is a block diagram of a channel identifier adding circuit in the time-division multiplexing transmission system illustrated in Fig. 1.
Fig. 4 is a block diagram of a first example of a channel identifying circuit in the time-division multiplexing transmission system illustrated in Fig. 1.
Fig. 5 is a block diagram of the reference channel detecting circuit in the time-division multiplexing transmission system illustrated in Fig. 1.
Fig. 6 is a time chart showing an operation of the reference channel detecting circuit illustrated in Fig. 5.
Fig. 7 is a block diagram of a second example of the channel identifying circuit in the time-division multiplexing transmission system illustrated in Fig. 1.
Fig. 8 illustrates a structure of the first to fourth signals in a time-division multiplexing transfer system in accordance with the second embodiment of the present invention.
Fig. 9 illustrates a structure of a reference channel signal in the time-division multiplexing transfer system in accordance with the second embodiment of the present invention.
Fig. 10 is a block diagram of a channel identifier adding circuit in the time-division multiplexing transmission system in accordance with the second embodiment of the present invention.
Fig. 11 is a block diagram showing a structure of a channel identifying circuit in the time-division multiplexing transmission system in accordance with the second embodiment of the present invention.
Fig. 12 is a block diagram showing another structure of a channel identifying circuit in the time-division multiplexing transmission system in accordance with the second embodiment of the present invention.
Fig. 13 is a block diagram of a communication system in accordance with an embodiment of the present invention.
Fig. 14 illustrates a first structure of a frame in the communication system illustrated in Fig. 13.
Fig. 15 illustrates a second structure of a frame in the communication system illustrated in Fig. 13.
Fig. 16 illustrates a third structure of a frame in the communication system illustrated in Fig. 13.
Fig. 17 is a block diagram showing a structure of a conventional time-division multiplexing transmission system.
Fig. 18 is a block diagram showing a structure of a conventional communication system.

### DESCRIPTION OF THE PREFERRED EMBODIMENTS

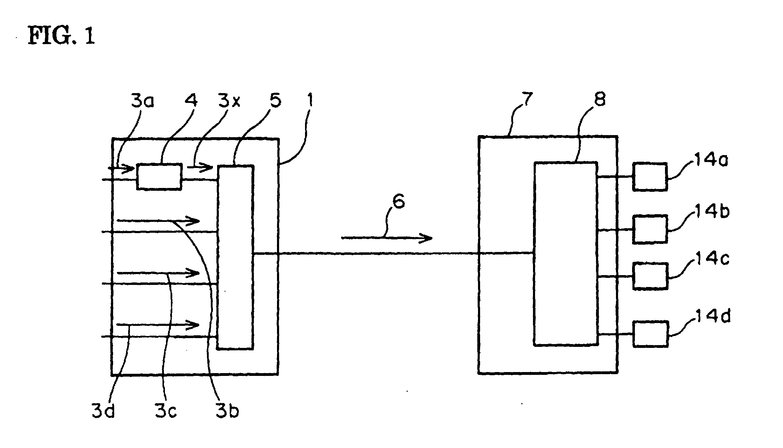

Fig. 1 is a block diagram of a time-division multiplexing transmission system in accordance with the first embodiment of the present invention.

The time-division multiplexing transmission system in accordance with the first embodiment is comprised of a transmitter unit 1 and a receiver unit 7. The transmitter unit 1 includes a circuit 4 which adds a channel identifier, and a multiplexing circuit 5, and the receiver unit 7 includes a circuit 8 which identifies a channel.

A line connecting the transmitter unit 1 and the receiver unit 7 to each other has a transmission capacity of 2.5 Gbps, and is comprised of four channels time-division multiplexed from a channel having a transmission capacity of 622 Mbps. Among four channel signals 3a, 3b, 3c and 3d each stored into a channel, the channel signal 3a includes ATM cell-base flow. The channel signal 3a is input into the channel identifier adding circuit 4, in which a HEC byte having 8 bits in a physical layer operation administration management cell is inverted, resulting in that the channel signal 3a is turned into a reference channel signal 3x.

The reference channel signal 3x is input into the multiplexing circuit 5 together with the other channel signals 3b, 3c and 3d. The multiplexing circuit 5 time-division bit-multiplexes the thus input signals, and transmits the multiplexed signals to the receiver unit 7 as time-division multiplexed transmission signal 6.

In the receiver unit 7, the time-division multiplexed transmission signal 6 transmitted from the multiplexing circuit 5 in the transmitter unit 1 is input into the channel identifying circuit 8, and is separated into channels in the channel identifying circuit 8. The channel identifying circuit 8 further detects the reference channel signal 3x among the four channel signals, and identifies the channel signals 3b, 3c and 3d, based on a difference in phase between the reference channel signal 3x and the other channel signals. The reference channel signal 3x is converted again into the channel signal 3a in the channel identifying circuit 8. All or a part of the thus identified channel signals 3a, 3b, 3c and 3d are output from the channel identifying circuit 8.

Four termination circuits 14a, 14b, 14c and 14d are connected to the channel identifying circuit 8. The channel signals 3a, 3b, 3c and 3d transmitted from the channel identifying circuit 8 are terminated in the termination circuits 14a, 14b, 14c and 14d, respectively.

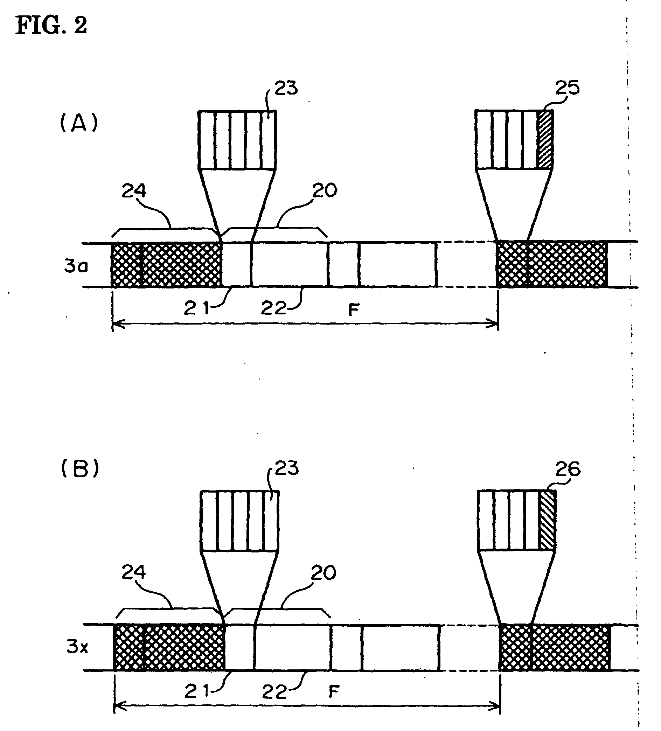

Fig. 2 shows how a channel identifier is added in the channel identifier adding circuit 4 in the transmitter unit 1.

The channel signal 3a is comprised of a cell-base flow formed of ATM cells connected to one another. As illustrated in Fig. 2(A), ATM cell 20 has a format having a fixed length and comprised of a 5-byte header 21 and a 48-byte pay-load 22. The header 21 is designed to have an area to store VCI/VPI indicative of connection. Results of CRC operation for protecting the header 21 are written in HEC byte 23 which is a fifth byte in the header 21.

ATM cell synchronization on the ATM cell-base flow is carried out by judging a phase in which CRC operation is established in a 53-byte cycle, as the HEC byte 23. The physical layer operation administration management cell (PLOAM cell) 24 defined for maintaining and managing a physical layer in the system is cyclically inserted into the ATM cell-base flow. In Fig. 2, PLOAM 24 is designed to have a cycle equal to an interval of F cells wherein F is a positive integer.

An inherent header value is applied to a header in PLOAM cell 24. As illustrated in Fig. 2A, PLOAM-HEC 25 is inserted into a fifth byte. After establishing ATM cell synchronization by virtue of CRC operation, he channel identifier adding circuit 4 detects the inherent header in PLOAM call 24, and inverts PLOAM-HEC 25 to thereby convert PLOAM cell 24 into the reference channel signal 3x. Thus, as illustrated in Fig. 2(B), the reference channel signal 3x converted from PLOAM cell 24 includes PLOAM-inverted HEC 26.

When the channel signals 3b, 3c and 3d are comprised of ATM cell-base flow, it would be possible to distinct the reference channel signal 3x from the other ATM cell-base flows by judging whether PLOAM cell 24 includes PLOAM-HEC 25 or PLOAM-inverted HEC 26.

Even when the channel signals 3b, 3c and 3d are not comprised of ATM cell-base flows, it would be possible to distinct the reference channel signal 3x from the other channel signals 3b, 3c and 3d by detecting PLOAM-inverted HEC 26.

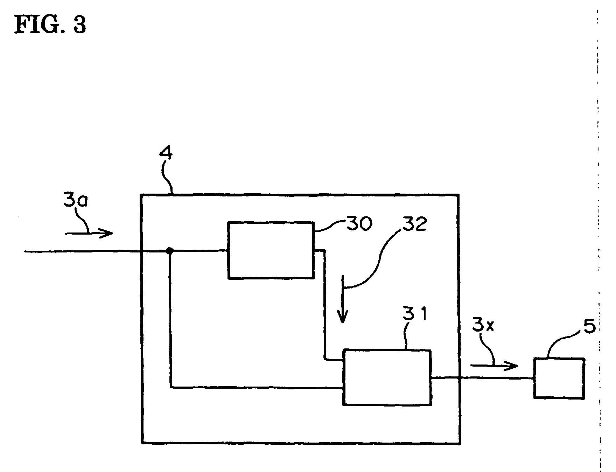

Fig. 3 is a block diagram showing a structure of the channel identifier adding circuit 4 in the transmitter unit 1.

The channel signal 3a input into the channel identifier adding circuit 4 is separated into two signals one of which is input into a PLOAM cell synchronizing circuit 30 and the other of which is input into an inversion circuit 31. The PLOAM cell synchronizing circuit 30 establishes ATM cell synchronization to ATM cell-base flow of which the channel signal 3a is comprised, detects a header in PLOAM cell 24, and transmits a PLOAM-HEC byte timing signal to the inversion circuit 31 in synchronization with PLOAM-HEC byte 25 in the detected header.

The inversion circuit 31 inverts PLOAM-HEC 25 in accordance with a timing defined by the PLOAM-HEC byte timing signal 32. ATM cell-base flow in which PLOAM-HEC 25 is inverted, that is, the reference channel signal 3x is transmitted from the channel identifier adding circuit 4, and input into the multiplexing circuit 5.

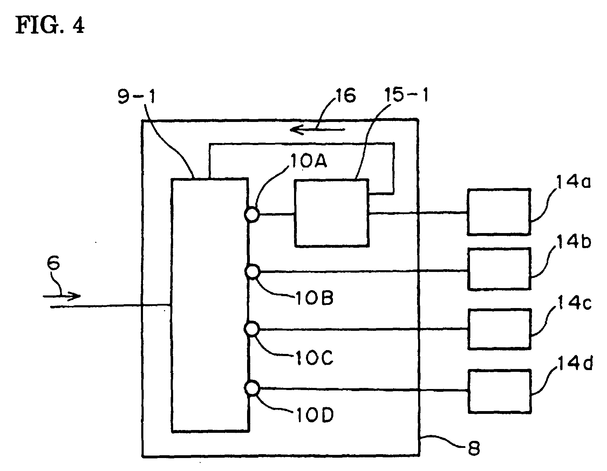

Fig. 4 is a block diagram showing a first example of a structure of the channel identifying circuit 8 in the receiver unit 7.

The channel identifying circuit 8 is comprised of a separating circuit 9-1 having a function of rotating a bit, and a circuit 15-1 for detecting a reference channel.

The time-division multiplexed transmission signal 6 transmitted from the multiplexing circuit 5 in the transmitter unit 1 is input into the separation circuit 9-1, and is separated into four channel signals. The separation circuit 9-1 has four output ports 10A, 10B, 10C and 10D. The reference channel detecting circuit 15-1 is connected to the separation circuit 9-1 through the first output port 10A.

The reference channel detecting circuit 15-1 monitors the received channel signal for a predetermined period of time, and transmits a bit rotation signal 16 to the separation circuit 9-1 in order to receive another channel signal, if. PLOAM-inverted HEC 26 is not detected. The bit rotation signal 16 is input into the separation circuit 9-1, and activates the bit-rotation function of the separation circuit 9-1. With the bit-rotation function being activated, channel signals transmitted from the output ports of the separation circuit 9-1 are incremented or decremented.

As mentioned above, the reference channel detecting circuit 15-1 repeats transmitting the bit rotation signal 16 to thereby switch the channel signal to be monitored, until PLOAM-inverted HEC 26 is detected.

At the time when PLOAM-inverted HEC 26 is detected, that is, the reference channel is detected, a signal transmitted from the first output port 10A is always the reference channel signal 3x. At the same time, the channel signals 3b, 3c and 3d are transmitted from he second, third and fourth output ports 10B, 10C and 10D to the termination circuits 14b, 14c and 14d, respectively.

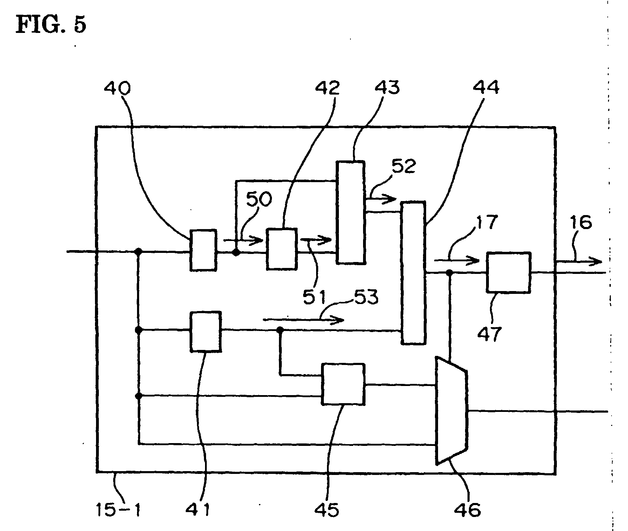

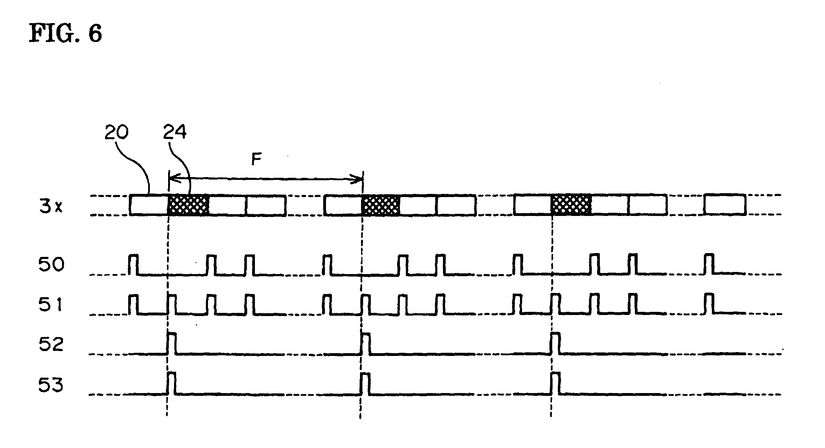

Fig. 5 is a block diagram showing a structure of the reference channel detecting circuit 15-1, and Fig. 6 is a timing chart showing an operation of the reference channel detecting circuit 15-1.

The signal having been input to the reference channel detecting circuit 15-1 is introduced into a CRC operation circuit 40 and a HEC byte-inversion CRC operation circuit 41. The CRC operation circuit 40 carried out CRC operation for establishing ATM cell synchronization, and transmits a timing at which the CRC operation is established, to an ATM cell synchronization circuit 42 as results 50 of the CRC operation.

Though the CRC operation is established at HEC byte 23 on ATM cell-base flow, the CRC operation cannot be established at PLOAM-inverted HEC 26 when the reference channel signal 3x is input into the CRC operation circuit 40. Hence, as illustrated in Fig. 6, a flag is not formed only at a phase of PLOAM cell 24 in a signal waveform of the CRC operation results 50 transmitted from the CRC operation circuit 40.

The ATM cell synchronization circuit 42 receiving the CRC operation results 50 includes a counter (not illustrated) having a cycle coincident with that of ATM cell 20 (see Fig .2). The ATM cell synchronization circuit 42 synchronizes the counter with a phase of ATM cell 20 in accordance with the CRC operation results 50, to thereby establish ATM cell synchronization. Since the ATM cell synchronization is protected, it would be possible to establish ATM cell synchronization well, even if PLOAM-inversion HEC 26 prevents a flag from being formed in the CRC operation results 50.

Accordingly, as illustrated in Fig. 6, an ATM cell synchronization signal 51 transmitted from the ATM cell synchronization circuit 42 has a signal waveform in which a flag is formed at every ATM cell 20 including PLOAM cell 24.

When the ATM cell synchronization circuit 42 cannot establish ATM cell synchronization, a channel signal input into the reference channel detecting circuit 15-1 is not judged to be the reference channel signal 3x.

The CRC operation results 50 and the ATM cell synchronization signal 51 are input into an inconsistency detecting circuit 43 without a delay to each other. Comparing the results 50 and the signal 51 to each other, a flag is not formed in the CRC operation results 50 at a phase of PLOAM-inverted HEC 26 only when the reference channel signal 3x is input into the reference channel detecting circuit 15-1, whereas a flag is formed in the ATM cell synchronization signal 51 at a phase of PLOAM-inverted HEC 26. Hence, the inconsistency detecting circuit 43 detects an inconsistency only at a phase of PLOAM-inverted HEC 26, and hence, a flag is formed in an inconsistency detecting signal 52 transmitted from the inconsistency detecting circuit 43.

The HEC byte-inversion CRC operation circuit 41 carries out CRC operation after inverting a part corresponding to HEC byte 23, and outputs results 53 of HEC byte-inversion CRC operation. Accordingly, when the HEC byte-inversion CRC operation circuit 41 receives the reference channel signal 3x, the CRC operation is established only at a phase of PLOAM-inverted HEC 26, and resultingly, a flag is formed in the results 53 of HEC byte-inversion CRC operation.

Accordingly, as illustrated in Fig. 6, the inconsistency detecting signal 52 and the results 53 of HEC byte-inversion CRC operation are coincident in a signal waveform with each other only when the reference channel signal 3x is input into the reference channel detecting circuit 15-1.

A reference channel judging circuit 44 monitors both the inconsistency detecting signal 52 and the results 53 of HEC byte-inversion CRC operation, and transmits a reference channel detecting signal 17 when they are coincident with each other. When the reference channel detecting signal 17 is not transmitted for a certain period of time, a time-out counter 47 transmits the bit rotation signal 16.

The reference channel detecting circuit 15-1, on detecting the reference channel, inverts again PLOAM-inverted HEC 26 in the reference channel signal 3x into the channel signal 3a, and transmits the channel signal 3a. That is, a re-inversion circuit 45 re-inverts PLOAM-inverted HEC 26 in the channel signal input into the reference channel detecting circuit 15-1, in synchronization with the results 53 of HEC byte-inversion CRC operation.

The thus inverted channel signal 3a is input into a reference channel switch 46. The reference channel switch 46 receives an output signal transmitted from the re-inversion circuit 45 and the signal having been input into the reference channel detecting circuit 15-1. The reference channel switch 46 transmits the output signal received from the re-inversion circuit 45, when the reference channel detecting signal 17 is received, and transmits the signal input into the reference channel detecting circuit 15-1, as it is, when the reference channel detecting signal 17 is not received.

Accordingly, when the reference channel signal 3x is input into the reference channel detecting circuit 15-1, PLOAM-inverted HEC 26 is inverted, and the channel signal 3a is output from the reference channel detecting circuit 15-1.

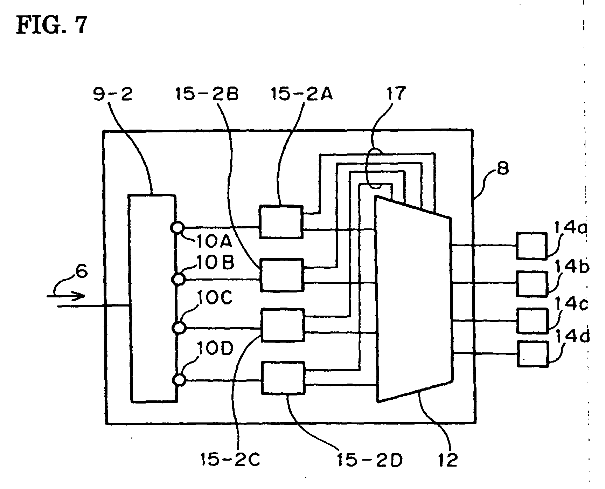

Fig. 7 is a block diagram illustrating a second example of the channel identifying circuit 8.

The time-division multiplexed transmission signal 6 is input into a separation circuit 9-2, and separated into four channel signals. The separation circuit 9-2 includes first, second, third and fourth output ports 10A, 10B, 10C and 10D, which are connected to reference channel detecting circuits 15-2A, 15-2B, 15-2C and 15-2D, respectively.

Among the reference channel detecting circuits 15-2A, 15-2B, 15-2C and 15-2D, one which detects the reference channel transmits the reference channel detecting signal 17.

A switch 12 receives the reference channel detecting signal 17, and identifies other channels, based on a phase of the reference channel. Then, the switch 12 switches a connection such that channel signals are transmitted to the associated termination circuits 14a, 14b, 14c and 14d located at a later stage of the switch 12.

The reference channel detecting circuits 15-2A, 15-2B, 15-2C and 15-2D may be designed to have the same structure as the reference channel detecting circuit 15-1 illustrated in Fig. 5, in which case, the reference channel detecting circuits 15-2A, 15-2B, 15-2C and 15-2D do not need to include the time-out counter 47.

Similarly to reference channel detecting circuit 15-1, when the reference channel detecting circuits 15-2A, 15-2B, 15-2C and 15-2D receive the reference channel signal 3x through the reference channel switch 46, the circuits 15-2A, 15-2B, 15-2C and 15-2D invert PLOAM-inverted HEC 26, and output the channel signal 3a. On the other hand, when the reference channel detecting circuits 15-2A, 15-2B, 15-2C and 15-2D receive the channel signal 3b, 3c or 3d, the circuits 15-2A, 15-2B, 15-2C and 15-2D output the received channel signal 3b, 3c or 3d as it is.

In the first embodiment, time-division multiplexing is carried out in bit-multiplexing, but may be carried out in byte-multiplexing.

In the first embodiment, when HEC byte 23 in PLOAM cell 24 is to be inverted, HEC byte 2 is inverted in its entirety. However, only a part of HEC byte 23 may be inverted.

When a part of HEC byte 23 is inverted, a plurality of reference channel signals may be used by inverting different parts in the reference channel signals.

Though the number of channels in the first embodiment is set to be four, the number of channels is not to be limited to four. The first embodiment may be applied to a time-division multiplexing transmission system having three channels or smaller, or five channels or greater.

Hereinbelow is explained a time-division multiplexing transmission system in accordance with the second embodiment.

The time-division multiplexing transmission system in accordance with the second embodiment has the same structure as the structure of the time-division multiplexing transmission system in accordance with the first embodiment.

A line connecting the transmitter unit 1 and the receiver unit 7 to each other has a transmission capacity of 2.5 Gbps, and is comprised of four channels time-division multiplexed from a channel having a transmission capacity of 622 Mbps. The first to fourth channel signals 3a, 3b, 3c and 3d to be stored into an associated channel include ATM cell-base flow.

Among the channel signals 3a, 3b, 3c and 3d, the first channel signal 3a is input into the channel identifier adding circuit 4, in which an inherent bit pattern is modulo-2 added into HEC byte in ATM cell header, resulting in that the channel signal 3a is turned into a reference channel signal 3x.

The reference channel signal 3x is input into the multiplexing circuit 5 together with the second to fourth channel signals 3b, 3c and 3d. The multiplexing circuit 5 time-division bit-multiplexes the thus input second to fourth channel signal 3b, 3c and 3d and the reference channel signal 3x, and transmits the thus multiplexed signals to the receiver unit 7 as time-division multiplexed transmission signal 6.

In the receiver unit. 7, the time-division multiplexed transmission signal 6 transmitted from the transmitter unit 1 is input into the channel identifying circuit 8, and is time-division bit-separated in the channel identifying circuit 8 into the channel signals 3x, 3b, 3c and 3d. The channel identifying circuit 8 further detects the reference channel signal 3x among the four channel signals, and identifies all of the channel signals, based on a difference in phase between the reference channel signal 3x and the other channel signals. The reference channel signal 3x is converted again into the channel signal 3a in the channel identifying circuit 8. All or a part of the thus identified channel signals is output to the termination circuits 14a, 14b, 14c and 14d from the channel identifying circuit 8.

The termination circuits 14a, 14b, 14c and 14d terminate the associated channel signals 3a, 3b, 3c and 3d.

The reference channel signal 3x is transmitted from the channel identifying circuit 8 after being re-converted into the first channel signal 3a in the channel identifying circuit 8.

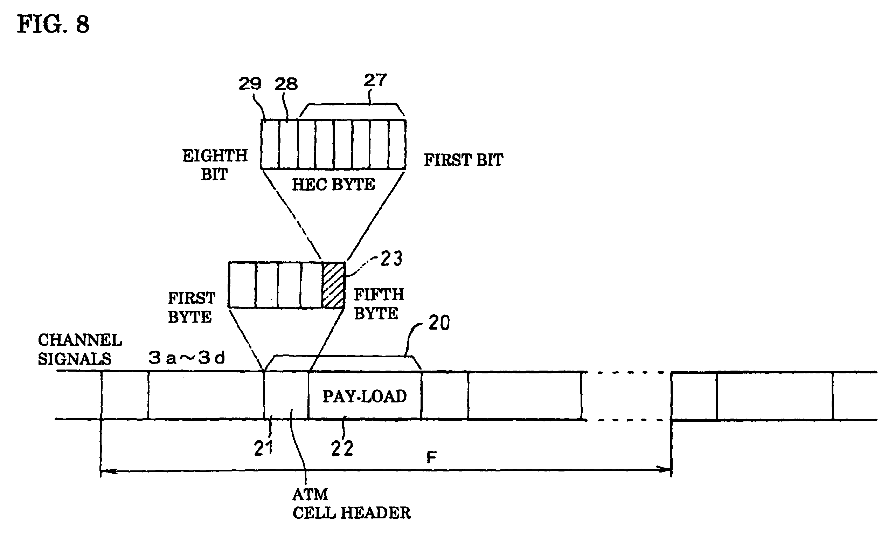

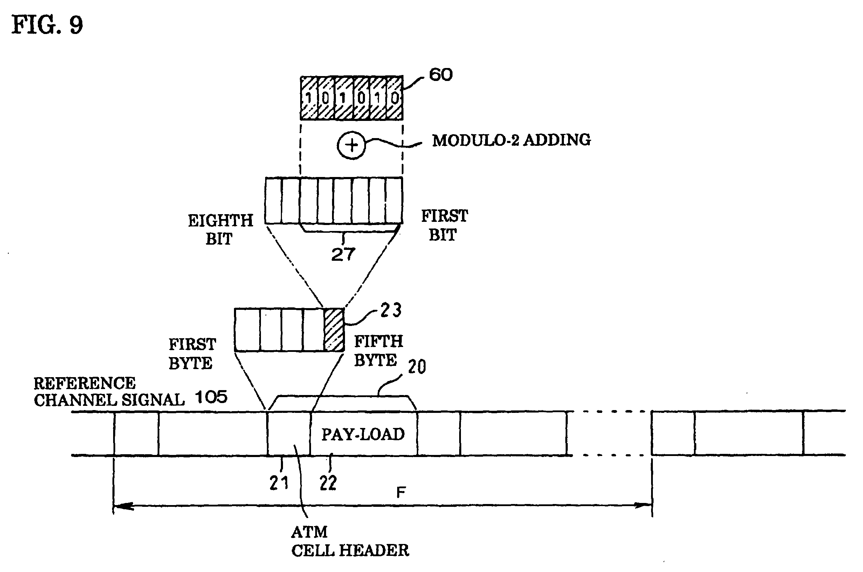

Fig. 8 illustrates structures of the first to fourth channel signals 3a, 3b, 3c and 3d, and Fig. 9 illustrates a structure of the reference channel signal 3x. With reference to Figs. 8 and 9, hereinbelow is explained how a channel identifier is added in the channel identifier adding circuit 4 in the transmitter unit 1.

The channel signal 3a is comprised of a cell-base flow formed of ATM cells connected to one another. ATM cell 20 has a format having a fixed length and comprised of a 5-byte header 21 and a 48-byte pay-load 22. The header 21 is designed to have an area to store VCI (Virtual Channel Identification)/VPI (Virtual Path Identification) indicative of connection.

Results of CRC operation for protecting the ATM cell header 21 are written in HEC byte 23 which is a fifth byte in the ATM cell header 21.

ATM cell synchronization on the ATM cell-base flow is carried out by judging a phase in which CRC operation is established in a 53-byte cycle, as the HEC byte 23. In order to make it easy to detect a synchronization clock in the receiver unit, ATM cell-base flow is scrambled.

Since the first two bits in HEC byte 23 (HEC eighth bit 24 and HEC seventh byte 28) are used for, scrambling synchronization, CRC operation is carried out by the last six bits 27 in HEC byte 23 (HEC sixth bit to HEC first bit) for establishing ATM cell synchronization.

As illustrated in Fig. 9, the channel identifier adding circuit 4 modulo-2 adds an inherent bit pattern 60 to HEC sixth to first bits 27 to thereby convert the channel signal into the reference channel signal 3x, after establishing ATM cell synchronization by carrying out CRC operation.

In the embodiment, a fixed bit pattern in six bits "101010" is used as the inherent bit pattern 60.

A recipient carries out CRC operation, after modulo-2 adding the inherent bit pattern 60 ("101010") into HEC sixth to first bits 27, to thereby establish ATM cell synchronization. Thus, ATM cell synchronization is established relative to the reference channel signal 3x.

Since HEC sixth to first bits 27 are deformed, it is impossible to establish ATM cell synchronization relative to the second to fourth channel signals 3b, 3c and 3d by the above-mentioned steps. Accordingly, the reference channel signal 3x can be readily distinguished from the second to fourth channel signals 3b, 3c and 3d.

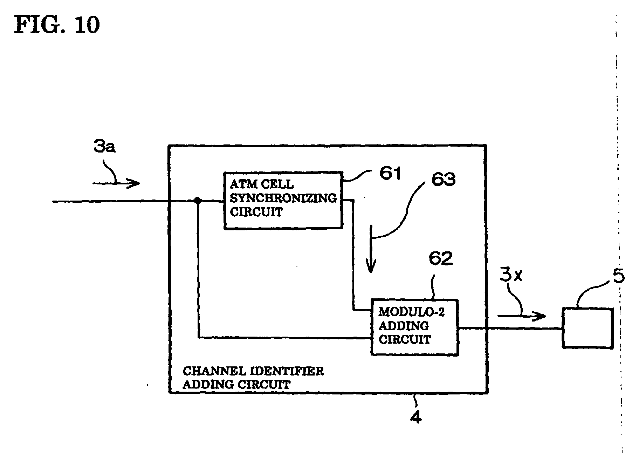

Fig. 10 is a block diagram illustrating an example of the channel identifier adding circuit 4 in the second embodiment. The channel identifier adding circuit 4 is comprised of an ATM cell synchronizing circuit 61 and a modulo-2 adding circuit 62.

The first channel signal 3a input into the channel identifier adding circuit 4 is separated into two signals one of which is input into the ATM cell synchronizing circuit 61 and the other of which is input into the modulo-2 adding circuit 62. The ATM cell synchronizing circuit 61 establishes ATM cell synchronization relative to ATM cell-base flow of the first channel signal 3a, and thereafter, transmits a HEC byte timing signal 63 synchronized with HEC byte 23, to the modulo-2 adding circuit 62.

The modulo-2 adding circuit 62 modulo-2 adds the inherent bit pattern 60 to HEC sixth to first bits 27 in HEC byte 23 in accordance with a timing defined by HEC byte timing signal 63. Accordingly, the modulo-2 adding circuit 62 transmits the reference channel signal 3x, which is transmitted to the multiplexing circuit 5 from the channel identifier adding circuit 4.

The channel identifying circuit 8 in the second embodiment may be designed to have the same structure as the structure of the channel identifying circuit 8 in the first embodiment illustrated in Fig. 4. However, unlike the channel identifying circuit 8 in the first embodiment, the channel identifying circuit 8 in the second embodiment operates as follows.

The time-division multiplexed transmission signal 6 transmitted from the multiplexing circuit 5 in the transmitter unit 1 is input into the separation circuit 9-1, and is separated into four channel signals. The reference channel detecting circuit 15-1 is connected to the separation circuit 9-1 through the first output port 10A, among the four output ports 10A, 10B, 10C and 10D of the separation circuit 9-1.

The reference channel detecting circuit 15-1 carries out CRC operation, in which the inherent bit pattern 60 is modulo-2 added to the HEC sixth to first bits 27, in the received channel signal, to thereby establish ATM cell synchronization.

The reference channel detecting circuit 15-1 transmits a bit rotation signal 16 to the separation circuit 9-1 in order to receive another channel signal, if ATM cell synchronization cannot be established for a certain period of time. The bit rotation signal 16 is input into the separation circuit 9-1, and activates the bit rotation function (function of changing a bit of a channel signal in rotation) of the separation circuit 9-1.

With the bit rotation function being activated, channel signals transmitted from the output ports 10A, 10B, 10C and 10D of the separation circuit 9-1 are incremented or decremented.

As mentioned above, the reference channel detecting circuit 15-1 repeats transmitting the bit rotation signal 16, until ATM cell synchronization is established to a signal into which the inherent bit pattern 60 is modulo-2 added.

Accordingly, a signal from the output port 10A at the time when the bit rotation has been finished is a signal to which the inherent bit pattern 60 is modulo-2 added with the result of establishment of ATM cell synchronization, that is, the reference channel signal 3x. At the same time, the channel signals 3b, 3c and 3d are transmitted from he second, third and fourth output ports 10B, 10C and 10D, respectively.

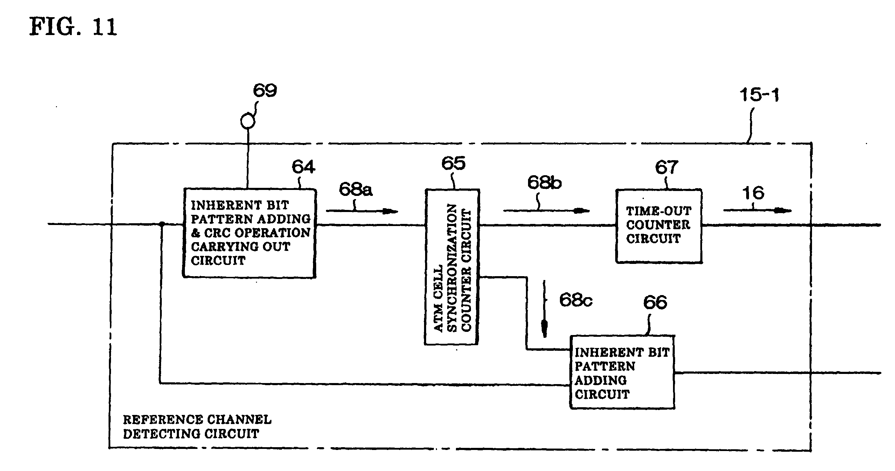

Fig. 11 is a block diagram illustrating an example of the reference channel detecting circuit 15-1 in the second embodiment.

The reference channel detecting circuit 15-1 in the second embodiment is comprised of a circuit 64 for adding an inherent bit pattern and carrying out CRC operation, an ATM cell synchronization counter circuit 65, a circuit 66 for adding an inherent bit pattern, and a time-out counter circuit 67.

A signal input into the reference channel detecting circuit 15-1 is introduced into both the inherent bit pattern adding and CRC operation carrying out circuit 64 and the inherent bit pattern adding circuit 66. The inherent bit pattern adding and CRC operation carrying out circuit 64 carries out CRC operation in which the inherent bit pattern 60 is modulo-2 added to HEC sixth to first bits 27, and transmits a timing at which the CRC operation can be established, to the ATM cell synchronization counter circuit 65 as results 68a of addition of the inherent bit pattern and CRC operation.

The ATM cell synchronization counter circuit 65 includes a circuit (not illustrated) for protecting synchronization, and establishes ATM cell synchronization with the synchronization being protected forward and backward. When the ATM cell synchronization can be established, since a received channel signal can be judged as the reference channel signal 3x, the ATM cell synchronization counter circuit 65 transmits a reference channel detecting signal 68b.

At the same time, the ATM cell synchronization counter circuit 65 transmits an ATM cell synchronization signal 68c synchronized with ATM cell, to the inherent bit pattern adding circuit 66. The inherent bit pattern adding circuit 66 modulo-2 adds the inherent bit pattern 60 to HEC sixth to first bits 27 in the reference channel signal 3x in accordance with a phase of the ATM cell synchronization signal 68c, to thereby convert the reference channel signal 3x into the channel signal 3a.

The time-out counter circuit 67 monitors the reference signal detecting signal 68b, and transmits the bit rotation signal 16 when the reference signal detecting signal 68b is not detected for a certain period of time.

In the second embodiment, the inherent bit pattern adding and CRC operation carrying out circuit 64 is designed to include a terminal 69 through which an inherent bit pattern is input into the reference channel detecting circuit 15-1. The terminal 69 makes it possible to set the inherent bit pattern 60 from outside of the reference channel detecting circuit 15-1.

Accordingly, even when a plurality of reference channels are to be set through a plurality of the inherent bit patterns 60, it would be possible to detect a specific reference channel signal 3x by designating a specific inherent bit pattern 60 from outside of the reference channel detecting circuit 15-1.

In the second embodiment, though the inherent bit pattern 60 is modulo-2 added into the HEC sixth to first bits 27 before CRC operation is carried out, the inherent bit pattern 60 may be modulo-2 added into the HEC sixth to first bits 27 after CRC operation has been carried out, and then, whether CRC operation is established or not may be judged.

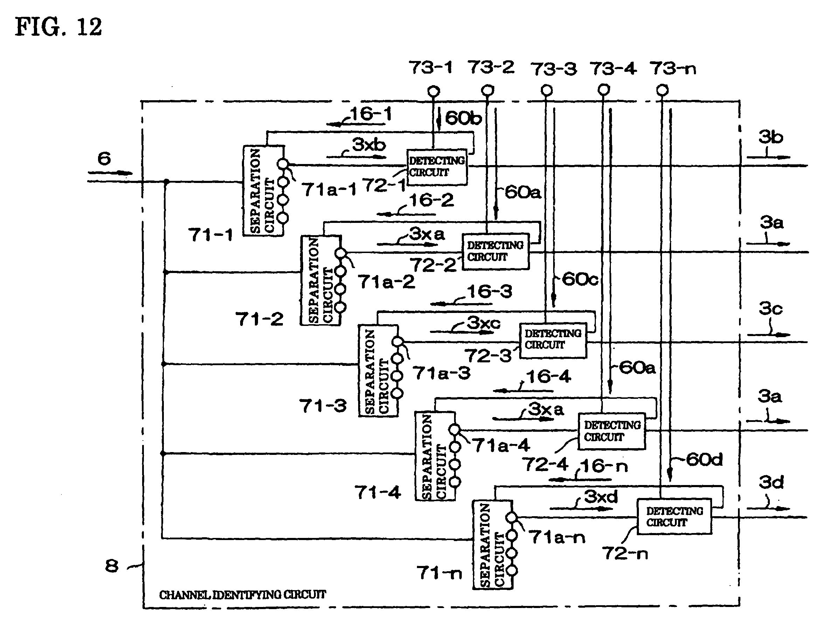

Fig. 12 is a block diagram illustrating another example of the channel identifying circuit 8 in the second embodiment. The channel identifying circuit 8 is comprised of n separation circuits 71-1 to 71-n each having a function of bit rotation, wherein "n" is a positive integer, and n reference channel detecting circuits 72-1 to 72-n associated with the separation circuits 71-1 to 71-n, respectively.

The channel identifying circuit 8 in the second embodiment is used when HEC sixth to first bits 27 in each of the first to fourth channel signals 3a, 3b, 3c and 3d is deformed into first to fourth inherent bit patterns 60a to 60d, respectively.

In the transmitter unit, the first to fourth inherent bit patterns 60a to 60d are modulo-2 added to the first to fourth channel signals 3a, 3b, 3c and 3d, resulting in that the first to fourth channel signals 3a, 3b, 3c and 3d are converted into first to fourth reference channel signals 3xa, 3xb, 3xc and 3xd, respectively, which are then time-division multiplexed. The time-division multiplexed transmission signal 6 having been input into the channel identifying circuit 8 is divided into n signals, and input into the separation circuits 71-1 to 71-n, respectively.

The first to n-th reference channel detecting circuits 72-1 to 72-n are located downstream of and connected to the separation circuits 71-1 to 71-n, and monitor one of output ports of the separation circuits 71-1 to 71-n (in Fig. 12, first output ports 71a-1 to 71a-n), respectively.

Any one of the first to fourth inherent bit patterns 60a to 60b is input into the first to n-th reference channel detecting circuits 72-1 to 72-n through first to n-th inherent bit pattern setting terminals 73-1 to 73-n, respectively.

For instance, when the second inherent bit pattern 60b is input into the first reference channel detecting circuit 72-1, the second inherent bit pattern 60b is modulo-2 added to HEC sixth to first bits 27 in a signal input into the first reference channel detecting circuit 72-1, thereby establishing ATM cell synchronization. If ATM cell synchronization cannot be established, the first reference channel detecting circuit 72-1 increments or decrements a channel signal transmitted from the separation circuit 71-1, until ATM cell synchronization is established.

When ATM cell synchronization is established, the second reference channel signal 3xb is converted into the second channel signal 3b, and then, is transmitted from the first reference channel detecting circuit 72-1.

As mentioned above, the channel identifying circuit 8 illustrated in Fig. 12 makes it possible to select and output a desired channel signal 3a to 3d by varying the inherent bit patterns 60a to 60d to be input into the reference channel detecting circuits 72-1 to 72-n. This means that the channel identifying circuit 8 in the second embodiment accomplishes a function of selecting a channel as well as a function of identifying a channel.

In the second embodiment, though time-division multiplexing is carried out in bit-multiplexing, time-division multiplexing may be carried out in byte-multiplexing.

Though the number of channels in the second embodiment is set to be four, the number of channels is not to be limited to four.

As mentioned so far, at least one of a plurality of channels stores ATM cell-base flow, and a transmitter deforms HEC byte in an ATM cell header in ATM cell-base flow into an inherent form to thereby set a reference channel. A recipient detects the thus deformed ATM cell to thereby identify the reference channel. Thus, it is possible to identify a channel on the basis of ATM cell-base flow in the time-division multiplexing transmission system.

In addition, the second embodiment makes it no longer necessary to add a redundant area for identification of a channel, and makes it possible for the system to be based on the standard specification of ATM cell-base flow. Accordingly, it would be possible to use widely used and/or standard circuits with the result of reduction in costs in construction of the system.

Hereinafter is explained an embodiment of a communication system to which the time-division multiplexing access system in accordance with the present invention is applied. In this embodiment, the present invention is applied to an optical access system including a passive optical fiber network.

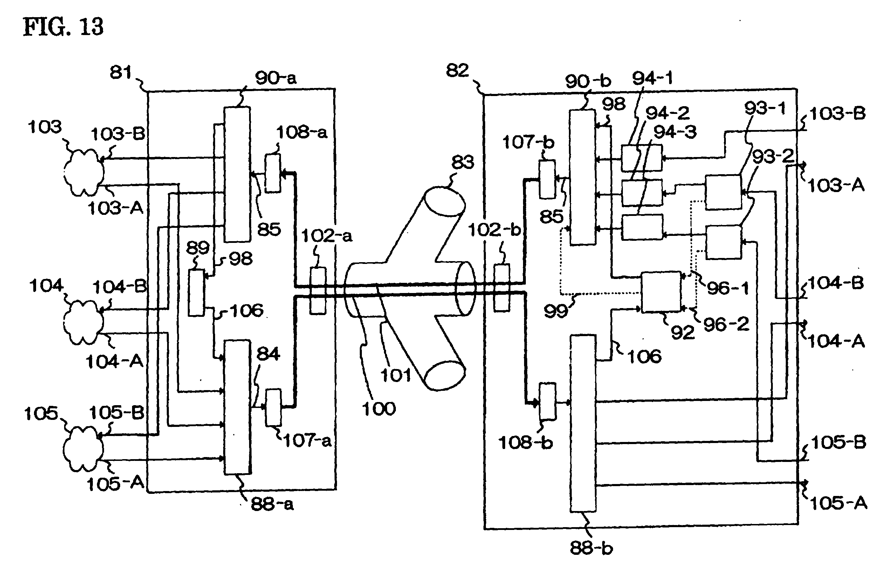

Fig. 13 is a block diagram illustrating a structure of the time-division multiplexing access system in accordance with the embodiment.

A terminal station unit 81 and a plurality of subscriber terminals 82 are connected to each other through a passive optical fiber network 83.

In the passive optical fiber network 83, in order to separate a descending line directing to the subscriber terminals 82 from the terminal station unit 81 and an ascending line directing to the terminal station unit 81 from the subscriber terminals 82 from each other, a signal light having a wavelength band of 1.5 µm is applied to a descending optical signal 100, and a signal light having a wavelength band of 1.3 µm is applied to an ascending optical signal 101. The descending and ascending lines both have a transmission capacity of 622 Mbps. The descending and ascending optical signals 100 and 101 are separated from each other by a station WDM coupler 102-a in the terminal station unit 81.

The terminal station unit 81 is connected to STM network 103 through which STM signals such as a telephone signal or N-ISDN signals are transmitted, ATM network 104 through which multi-media data signals are transmitted, and Ether network 105 through which IP packets are transmitted. A descending signal multiplexing circuit 88-a in the terminal station unit 81 stores a descending STM signal 103-A, a descending ATM signal 104-A, and a descending Ether packet signal 105-A, and transmits a descending signal 84 of 622 Mbps.

The descending signal 84 further includes a signal 106 for controlling access in an ascending line, transmitted from an access control circuit 89. The descending signal 84 is converted into a descending signal light 100 in a circuit 107-a for transmitting an optical signal, and the thus produced descending signal light 100 is each of the subscriber terminals 82 through the passive optical fiber network 83.

The subscriber terminal 82 separates the descending signal light 100 and the ascending signal light 101 from each other in a subscriber WDM coupler 102-b, and converts the descending signal light 100 into the descending signal 84 in a circuit 108-b for receiving an optical signal. The descending signal 84 is input into a circuit 88-b for terminating a descending signal, and is separated into an access control signal 106, a descending STM signal 103, a descending ATM signal 104-A, and a descending Ether packet 105-A. The access control signal 106 is input into and terminated in the an access control circuit 92. Data stored in the access control signal 106 is transmitted to an ascending signal multiplexing circuit 90-b as a timing control signal 99 at which an ascending signal is to be transmitted, and used for timing control under which a burst signal is transmitted in accordance with a time-slot in a frame.

An ascending STM signal 103-B is input into a first circuit 94-1 for generating an ascending signal, and is constructed into an ascending signal cell by applying a header thereto, for instance. An ascending ATM signal 104-B and an ascending Ether packet signal 105-B are stored once in first and second buffers 93-1 and 93-2, associated with the signals, respectively. The first and second buffers 93-1 and 93-2 transmit data stored therein to the access control circuit 92 as first and second data-storing signals 96-1 and 96-2. On receipt of those signals, the access control signal 92 transmits a signal 98 by which a band is requested in accordance with storage and priority of data. The band-requesting signal 98 is stored in a band-requesting area in the ascending line, and then, transmitted to the terminal station unit 81.

The ascending ATM signal 104-B and the ascending Ether packet signal 105-B are transmitted from the first and second buffers 93-1 and 93-2, respectively, and are constructed into an ascending signal cell or an ascending signal packet, for instance, by applying a header thereto, in second and third ascending producing circuits 93-1 and 93-2, respectively.

Output signals transmitted from the first to third ascending signal producing circuits 94-1, 94-2 and 94-3 are input into the ascending signal multiplexing circuit 90-b, and stored in the ascending signal 85 together with the band-requesting signal 98.

The ascending signal 85 is converted into the ascending signal light 101 in an optical signal transmitting circuit 107-b, and then, transmitted to the terminal station unit 81 through the passive optical fiber network 83. The terminal station unit 81 separates the ascending signal light 101 from the descending signal light 100 in the station WDM coupler 102-a, and then, inputs the thus separated ascending signal light 101 into an optical signal receiving circuit 108-a to thereby convert the ascending signal light 101 to the ascending signal 85. The ascending signal 85 is input into a circuit 90-1 which terminates an ascending signal, and is separated into the ascending STM signal 103-B, the ascending ATM signal 104-B, and the ascending Ether packet signal 105-B.

The band-requesting signal 98 is also separated from the ascending signal 85, and then, is input into the access control circuit 89.

The access control circuit 89 processes the band-requesting signal 98 transmitted from each of the subscriber terminals 82, and thereby obtains data stored in the first and second buffers 93-1 and 93-2 in each of the subscriber terminals 82. Since the first and second buffers 93-1 and 93-2 operate independently of each other, the access control circuit 89 can assign a band area in an ascending line to each of the subscriber terminals 82 in each of the signals. The access control circuit 89 transmits the result of the assignment as the above-mentioned access control signal 106. The subscriber terminal 82 stores the ascending ATM signal 104-B and the ascending Ether packet signal 105-B by mapping them in an ascending signal frame, based on the access control signal 106.

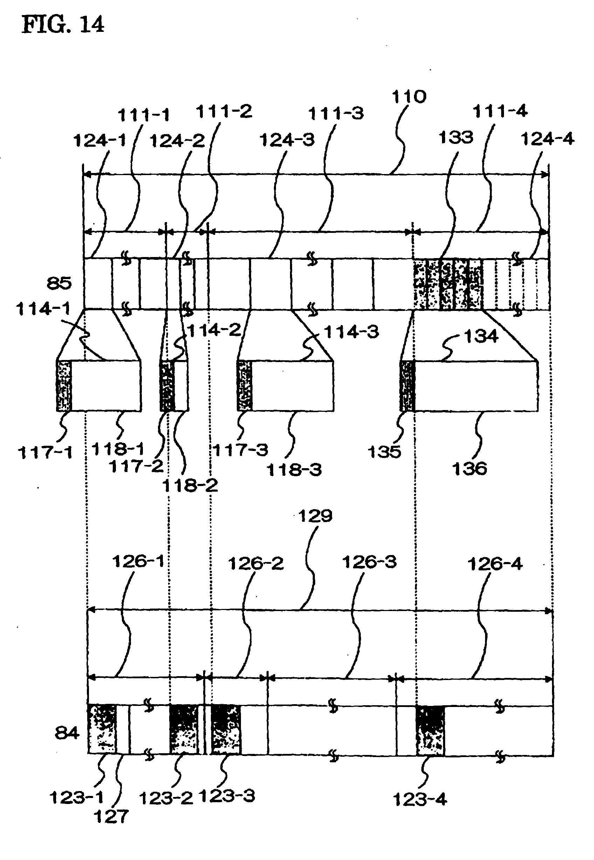

Fig. 14 illustrates a frame structure of an ascending signal 85 and a descending signal 84 in the second embodiment.

The ascending signal 85 is comprised of an ascending signal frame 110 having a length of 125 µs (9720 bytes), and the ascending signal frame 110 is comprised of a first ascending sub-frame 111-1, a second ascending sub-frame 111-2, a third ascending sub-frame 111-3, and a fourth ascending sub-frame 111-4.

The first ascending sub-frame 111-1 uses 160 bytes, the second ascending sub-frame 111-2 uses 160 bytes, the third ascending sub-frame 111-3 uses 3920 bytes, and the fourth ascending sub-frame 111-4 uses 4040 bytes in the ascending signal frame having 9720 bytes. Each of the ascending sub-frames is comprised of a time-slot having a different length from one another. Specifically, a first time-slot 124-1 of 50 bytes is assigned to the first ascending sub-frame 111-1, a second time-slot 124-2 of 5 bytes is assigned to the second ascending sub-frame 111-2, a third time-slot 124-3 of 56 bytes is assigned to the third ascending sub-frame 111-3, and a fourth time-slot 124-4 of 40 bytes is assigned to the fourth ascending sub-frame 111-4.

Each of the first to third time-slots 124-1, 124-2, and 124-3 stores an ascending signal cell having a length equal to the associated time-slot. A first ascending signal cell 114-1 is stored in the first time-slot 124-1, and is comprised of a first ascending signal cell header 117-1 of 3 bytes and a first ascending signal cell pay-load 118-1 of 47 bytes. The first ascending signal cell pay-load 118-1 stores a band-requesting signal of 47 bytes, transmitted from each of the subscriber terminals 82.

The ascending signal multiplexing circuit 90-b illustrated in Fig. 13 stores the first ascending signal cell 114-1 transmitted from the access control circuit 92, in the first time-slot 124-1 assigned to the subscriber terminal, in the first ascending sub-frame 111-1. The first time-slot 124-1 assigned to each of the subscriber terminal 82 is located at a fixed position in the first ascending sub-frame 111-1 in each of the subscriber terminals 82.

A second ascending signal cell 114-2 is stored in the second time-slot 124-2, and is comprised of a second ascending signal cell header 117-2 of 3 bytes and a second ascending signal cell pay-load 118-2 of 2 bytes. The second ascending signal cell pay-load 118-2 stores a telephone STM signal of 1 byte and a STM signal of 1 byte used for controlling a telephone.

The ascending signal multiplexing circuit 90-b illustrated in Fig. 13 stores the second ascending signal cell 114-2 transmitted from the first ascending signal producing circuit 94-1, in the second time-slot 124-2 assigned to the subscriber terminal, in the second ascending sub-frame 111-2. The second time-slot 124-2 assigned to each of the subscriber terminal 82 is located at a fixed position in the second ascending sub-frame 111-2 in each of the subscriber terminals 82.

A third ascending signal cell 114-3 is stored in the third time-slot 124-3, and is comprised of a third ascending signal cell header 117-3 of 3 bytes and a third ascending signal cell pay-load 118-3 of 53 bytes.

The ascending signal multiplexing circuit 90-b illustrated in Fig. 13 stores ATM cell in a third ascending signal cell pay-load 118-3 by means of the second ascending signal producing circuit 94-2, adds a second ascending signal cell header 117-2 to the ATM cell, and stores the ATM cell in the third time-slot 124-3 assigned to the subscriber terminal, in the third ascending sub-frame 111-3. A location of the third time-slot 124-3, assigned to each of the subscriber terminals 82, is designated by the terminal station unit 81 as the result of a request of a band made by each of the subscriber terminals 82.

The fourth time-slot 124-4 is a time-slot of 40 bytes. In the fourth time-slot 124-4, a plurality of time-slots connected to one another constitutes a connected time-slot 133, which stores therein an ascending signal packet 134 having a variable length. The ascending signal packet 134 is comprised of an ascending signal packet header 135 of 3 bytes and an ascending signal pay-load 136 having a variable length.

The ascending signal multiplexing circuit 90-b illustrated in Fig. 13 stores an Ether packet signal in the ascending packet pay-load 136 by means of the third ascending signal producing circuit 94-3, adds an ascending signal packet header to the Ether packet signal, and stores the Ether packet signal in the connected time-slot 133 assigned to the subscriber terminal, in the fourth ascending sub-frame 111-4. A location and a length of the connected time-slot 133, assigned to each of the subscriber terminals 82, are designated by the terminal station unit 81 as the result of a request of a band made by each of the subscriber terminals 82.

As mentioned so far, each of the ascending signals is stored in a time-slot as a signal independent from other signals, and is burst-transmitted. Since the first ascending signal cell header 117-1, the second ascending signal cell header 117-2, the third ascending signal cell header 117-3 and the ascending signal packet header 135 have the same basic structure such as a preamble, it would be possible in a receiver unit to establish bit synchronization in every cell or packet in a common circuit.

A method of carrying out access control in a descending line is explained hereinbelow with reference to Fig. 14.

A descending signal frame 129 has a length of 125 µs equal to a length of an ascending signal frame 110, and has first to fourth access controls areas 123-1 to 123-4 inserted thereinto. The first to fourth access control areas 123-1 to 123-4 are used to carry out access control in the first to fourth ascending sub-frames 124-1 to 124-4 in the ascending signal 85, and transmit a grant indicating that an ascending signal transmitted from each of the subscriber terminals is to be assigned to which time-slot.

Positions of the first to fourth access control areas 123-1 to 123-4 in the first descending signal frame 129 correspond to partitions between ascending sub-frames in the ascending signal frame 110, and indicate boundaries between ascending sub-frames.

An area in the descending signal frame 129 other than the first to fourth access control areas 123-1 to 123-4 is divided into first to fourth descending sub-frames 126-1 to 126-4. The first descending sub-frame 126-1 stores a descending signal used for management. The second descending sub-frame 126-2 stores the descending STM signal 103-A illustrated in Fig. 13. The third descending sub-frame 126-3 stores the descending ATM signal 104-A illustrated in Fig. 13. The fourth descending sub-frame 126-4 stores the descending Ether packet signal 105-A illustrated in Fig. 13.

Boundaries among the first to fourth descending sub-frames 126-1 to 126-4 are written in an area 127 inserted to a head of each of the frames.

If the ascending frame 110 and the descending frame 129 had a certain relation in a phase therebetween, it would not be necessary that starting points of the frames 110 and 129 are temporally coincident with each other.

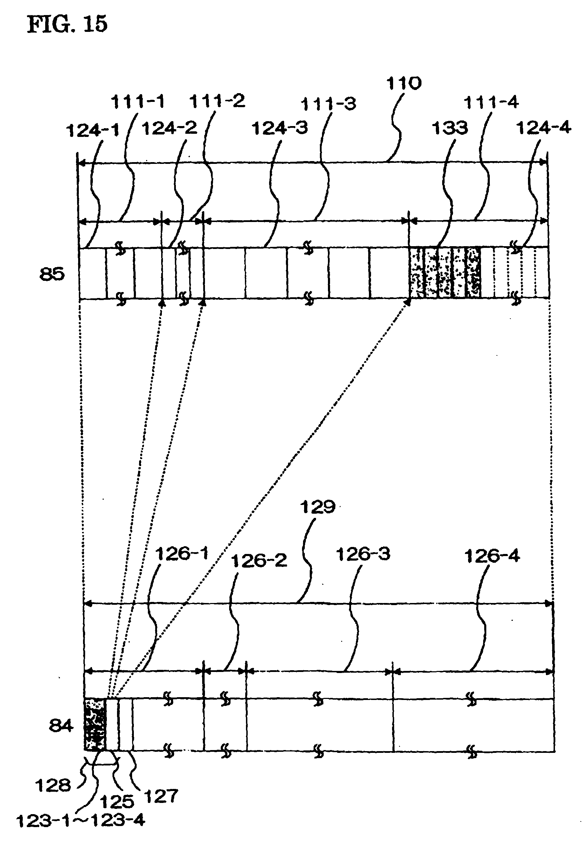

Fig. 15 illustrates a communication system in accordance with the second embodiment, to which the time-division multiplexing access system in accordance with the present invention is applied.

As illustrated in Fig. 15, the communication system in accordance with the second embodiment has the same structure as the first embodiment except the descending signal frame. That is, each of the frames in the second embodiment is designed to include the first to fourth access control areas 123-1 to 123-4 at a head. An ascending line control area 128 including the first to fourth access control areas 123-1 to 123-4 and an area 125 in which boundaries between ascending sub-frames are written is positioned at a head of the descending signal frame 129. An area 127 in which boundaries between descending sub-frames are written is positioned also at a head of the descending signal frame 129. The ascending line has the same structure as that of the ascending line illustrated in Fig. 14.

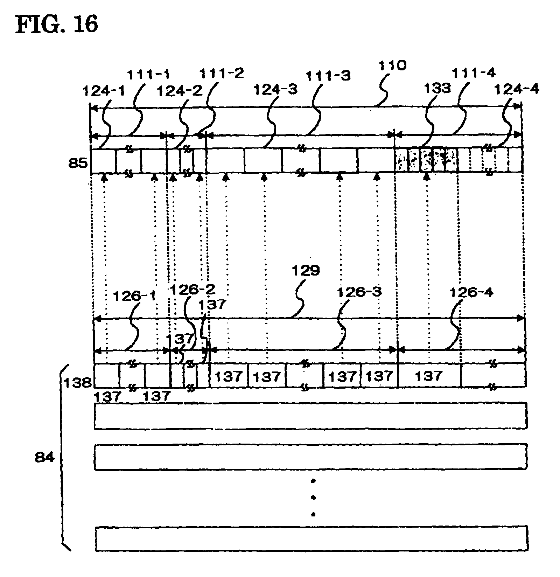

Fig. 16 illustrates a communication system in accordance with the third embodiment, to which the time-division multiplexing access system in accordance with the present invention is applied.

In the third embodiment, a descending line has a sign rate of 2.5 Gbps, and an ascending line has a sign rate of 156 Mbps. The descending line is divided into sixteen channels each having a sign rate of 156 Mbps which is equal to the sign rate of the ascending line, and one of the sixteen channels is designed to have a function of carrying out access control. Hereinbelow, a channel having the access control function is defined as a channel 138 to be used only for access control. In the channel 138, a poling signal 137 is used.

The channel 138 is comprised of a descending frame 129 having a length of 125 µs, and an ascending line is comprised of an ascending frame 110 having a length of 125 µs. The descending frame 129 is comprised of first to fourth descending sub-frames 126-1 to 126-4, similarly to the ascending frame 110. The first to fourth descending sub-frames 126-1 to 126-4 transmit poling signals 137 associated with time-slots of the first to fourth ascending sub-frames 111-1 to 111-4, respectively.

Accordingly, the poling signals 137 transmitted from the first to fourth descending sub-frames 126-1 to 126-4 are designed to a length equal to a length of the time-slots in the associated ascending sub-frames. When each of the subscriber terminals 82 receives the poling signal 137 addressed thereto, each of the subscriber terminals 82 stores an ascending signal cell in a time-slot in an ascending frame, associated with a timing at which the poling signal was received.

The above-mentioned communication systems in accordance with the first to third embodiments, to which the time-division multiplexing access system in accordance with the present invention is applied, include various alternatives, modifications and equivalents as follows.

For instance, when time-slots at a fixed position in a plurality of ascending sub-frames are assigned to one subscriber terminal 82, as time-slots in the first and second ascending sub-frames 111-1 and 111-2 are assigned to the subscriber terminal 82, those ascending sub-frames may be coupled to each other to thereby constitute an ascending signal cell in which cell pay-loads of the ascending sub-frames are coupled to each other to thereby constitute a single pay-load. A time-slot may be assigned to the thus constituted ascending signal cell.

In the first to third embodiments, though the systems use only STM signals, ATM signals and Ether packets, the systems may use other signals.

Though the ascending signal is designed to have a sign rate of 622 Mbps or 156 Mbps, and the descending signal is designed to have a sign rate of 622 Mbps or 2.5 Gbps in the first to third embodiments, the sign rates are not to be limited to those. The ascending and descending signals may have any sign rate.

Though the frame is designed to have a length of 125 µs in the embodiments, the frame may be designed to have a length other than 125 µs. Though the ascending sub-frame is designed to have a fixed length in the embodiments, the ascending sub-frames may have different lengths from one another in each of the frames, if the frames have a fixed length.

### INDUSTRIAL APPLICABILITY

The time-division multiplexing transmission system and the channel identifying system in accordance with the present invention present the following advantages.

The present invention accomplishes a function of identifying channels on the basis of ATM cell-base flow in a time-division multiplexing transmission system. The channel identifying system in accordance with the present invention makes it no longer necessary to add a redundant area for identification of a channel, and makes it possible for the system to be based on the standard specification of ATM cell-base flow, because the system brings no major changes to the specification of ATM cell-base flow. Accordingly, it would be possible to use widely used and/or standard circuits with the result of reduction in costs in construction of the system.

The communication system in accordance with the present invention presents the following advantages.

In accordance with the communication system, a plurality of sub-frames is formed in a frame for signal transmission, and each of the sub-frames is designed to have a time-slot having a length inherent to the sub-frame. Various signals can be stored separately in the sub-frames. Hence, it is no longer necessary to convert a signal form such as transfer mode or format, enabling to accomplish a communication system in which a plurality of signals having different forms from one another can be readily stored.

In addition, since signal transmission can be carried out independently in each of signals in a sub-frame, a signal is hardly influenced by other signals, and hence, a quality in each signal transmission can be enhanced.

For instance, if a signal form is converted into another form, for instance, if STM signal is converted into ATM cell, there are generated excessive areas in a cell, resulting in reduction in an efficiency at which a band is used. The communication system in accordance with the present invention makes it possible to directly store various signals, ensuring enhancement in an efficiency at which a band for an ascending signal is used.

## Claims

1. A system for identifying a channel, to be used in a time-division multiplexing transmission system in which a plurality of channels is time-division multiplexed for transmission, characterized in that
at least one of said channels stores asynchronous transfer mode (ATM) cell-base flow therein,
a transmitter includes a deformer which deforms a physical layer operation administration management cell (PLOAM cell) cyclically inserted into said ATM cell-base flow, into an inherent form,
said transmitter establishes a reference channel by means of said deformer,
a recipient includes a first detector which detects said physical layer operation administration management cell having been deformed into an inherent form,
said recipient identifies said reference channel by means of said first detector.

2. The system for identifying a channel, as set forth in claim 1, wherein
said transmitter includes a HEC byte inverter which inverts a HEC byte included in a header of said physical layer operation administration management cell,
said recipient includes a second detector which detects said physical layer operation administration management cell having the thus inverted HEC byte, and
said recipient identifies said reference channel by means of said second detector.

3. The system for identifying a channel, as set forth in claim 1 or 2, wherein said channels are time-division multiplexed by every bit or byte.

4. A system in which a plurality of channels is time-division multiplexed for transmission, characterized in that
at least one of said channels stores asynchronous transfer mode (ATM) cell-base flow therein,
a transmitter includes a transmitter unit comprising:
a channel identifier applying circuit which deforms a physical layer operation administration management cell in a channel storing said ATM cell-base flow, into an inherent form to produce a reference channel signal; and
a multiplexing circuit which receives channel signals including said reference channel signal, time-division multiplexes the thus received channel signals, and transmits the thus multiplexed channel signals as multiplexed transmission signals,
a recipient includes a receiver unit comprising:
a separating circuit which time-division separates said multiplexed transmission signals transmitted from said transmitter unit; and
at least one reference channel detecting circuit which inputs one of a plurality of channel signals transmitted from said separating circuit, and detects whether the thus input channel signal includes a physical layer operation administration management cell having been deformed into an inherent form, to thereby detect a reference channel.

5. The system as set forth in claim 4, wherein said channel identifier applying circuit includes:
a synchronizer for synchronizing with HEC of said physical layer operation administration management cell; and
an inverter for inverting HEC of said physical layer operation administration management cell.

6. The system as set forth in claim 4 or 5, wherein said reference channel detecting circuit includes:
a first unit which receives separated channels and carries out CRC operation;
an ATM cell synchronizer for synchronizing with ATM cell in accordance with results of the operation carried out by said CRC operating unit; and
a second unit which inverts HEC in said physical layer operation administration management cell and carries out CRC operation.

7. The system as set forth in claim 6, wherein said reference channel detecting circuit includes:
an inconsistency detecting circuit which receives results of the operation carried out by said CRC operating unit and ATM cell synchronization signals transmitted from said ATM cell synchronizer, judges whether they are consistent with each other, and transmits an inconsistency detection signal when they are inconsistent with each other; and
a reference channel judging circuit which receives said inconsistency detection signal and results of the operation carried out by said second unit, and detects a reference channel.

8. The system as set forth in claim 7, further comprising a time-out counter which transmits a bit-rotation signal when said reference channel is not detected for a certain period of time in said reference channel judging circuit.

9. The system as set forth in any one of claims 4 to 8, wherein said receiver unit receives a reference channel detection signal transmitted from said reference channel detecting circuit, and identifies other channels on the basis of a phase of the reference channel, and wherein said receiver unit includes a switch which switches a connection in accordance with results of identification of said other channels.

10. The system as set forth in any one of claims 5 to 9, wherein said inverter inverts a part of HEC of said physical layer operation administration management cell.

11. The system as set forth in claim 10, wherein said inverter inverts different parts of HEC from one another in the reference channel signals.

12. The system as set forth in any one of claims 4 to 11, wherein said channels are time-division multiplexed by every bit or byte.

13. A method of identifying a channel, to be used in a time-division multiplexing transmission system in which a plurality of channels is time-division multiplexed for transmission,
at least one of said channels storing asynchronous transfer mode (ATM) cell-base flow therein,
said method including the steps of:
deforming a physical layer operation administration management cell (PLOAM cell) cyclically inserted into said ATM cell-base flow, into an inherent form to thereby establish a reference channel, said deforming being carried out by a transmitter;
detecting said physical layer operation administration management cell having been deformed into an inherent form, to thereby identify said reference channel, said detecting being carried out by a recipient.

14. The method as set forth in claim 13, further comprising the steps of:
inverting a HEC byte included in a header of said physical layer operation administration management cell, said inverting being carried out by said transmitter; and
detecting said physical layer operation administration management cell having the thus inverted HEC byte, to thereby identify said reference channel, said detecting being carried out by said recipient.

15. The method as set forth in claim 13 or 14, wherein said channels are time-division multiplexed by every bit or byte.

16. A method of time-division multiplexing a plurality of channels for transmission,
at least one of said channels storing asynchronous transfer mode (ATM) cell-base flow therein,
said method including:
the first step of deforming a physical layer operation administration management cell in a channel storing said ATM cell-base flow, into an inherent form to produce a reference channel signal, said first step being carried out by a transmitter;
the second step of receiving channel signals including said reference channel signal, time-division multiplexing the thus received channel signals, and transmitting the thus multiplexed channel signals as multiplexed transmission signals;
the third step of time-division separating said time-division multiplexed transmission signals, said third step being carried out by a recipient; and
the fourth step of inputting one of a plurality of channel signals transmitted in said third step, and judging whether the thus input channel signal includes said physical layer operation administration management cell having been deformed into an inherent form, to thereby detect a reference channel.

17. The method as set forth in claim 16, wherein said first step includes:
synchronizing with HEC of said physical layer operation administration management cell; and
inverting HEC of said physical layer operation administration management cell.

18. The method as set forth in claim 16 or 17, wherein said fourth step includes:
receiving separated channels and carrying out CRC operation;
synchronizing with ATM cell in accordance with results of said CRC operation; and
inverting HEC in said physical layer operation administration management cell and carrying out CRC operation.

19. The method as set forth in claim 18, wherein said fourth step includes:
judging whether the results of said CRC operation are inconsistent with the results of the step of synchronizing with ATM cell; and
detecting a reference channel, based on the results of said judging step and the results of said CRC operation.

20. The method as set forth in claim 19, further comprising the step of transmitting a bit-rotation signal when said reference channel is not detected for a certain period of time.

21. The method as set forth in any one of claims 16 to 20, further comprising the step of identifying other channels on the basis of a phase of said reference channel, and switching a connection in accordance with the results of identification of said other channels.

22. The method as set forth in any one of claims 17 to 21, wherein a part of HEC of said physical layer operation administration management cell is inverted in the step of inverting HEC of said physical layer operation administration management cell.

23. The method as set forth in claim 22, wherein different parts of HEC from one another are inverted in the reference channel signals.

24. The method as set forth in any one of claims 16 to 23, wherein said channels are time-division multiplexed by every bit or byte.

25. A system for identifying a channel, to be used in a time-division multiplexing transmission system in which a plurality of channels is time-division multiplexed for transmission,
characterized in that at least one of said channels stores asynchronous transfer mode (ATM) cell-base flow therein, and
characterized by
a transmitter unit comprising:
a channel identifier adder which is formed in a cell header of a channel storing said ATM cell-base flow, and which deforms a HEC byte indicative of data used for detecting and correcting an error in transmitted data, into an inherent form to thereby produce a reference channel signal; and
a multiplexer which time-division multiplexes channel signals including said reference channel signal, and transmits the thus multiplexed channel signals as time-division multiplexed signals, and
a receiver unit comprising:
at least one separator which time-division separates said time-division multiplexed signals; and
at least one reference channel detector which detects a reference channel signal including said HEC byte, among a plurality of channel signals produced by said separator.

26. The system as set forth in claim 25, wherein said channel identifier adder includes:
a synchronizer which synchronizes said channel signals with one another, based on said HEC byte; and
a modulo 2 adder which modulo-2 adds an inherent bit pattern to said HEC byte.

27. The system as set forth in claim 26, wherein said reference channel detector includes a modulo-2 adder and CRC operator which modulo-2 adds said inherent bit pattern to said HEC byte, and carries out cyclic redundancy check (CRC) operation to said HEC byte.

28. The system as set forth in claim 26, further comprising a plurality of reference channel detectors, each of said reference channel detectors being comprised of:
an input terminal through which an associated inherent bit pattern is input; and
a modulo-2 adder and CRC operator which modulo-2 adds said inherent bit pattern input through said input terminal, to said HEC byte, and carries out cyclic redundancy check operation to said HEC byte.

29. A system for identifying a channel, to be used in a time-division multiplexing transmission system in which a plurality of channels is time-division multiplexed for transmission,
characterized in that
at least one of said channels stores asynchronous transfer mode (ATM) cell-base flow therein,
a transmitter deforms a HEC byte into an inherent form to thereby produce a reference channel, said HEC byte being formed in a cell header of a channel storing said ATM cell-base flow, and being indicative of data used for detecting and correcting an error in transmitted data,
a receiver detects said reference channel signal including said HEC byte having been deformed into said inherent form.

30. The system as set forth in claim 29, wherein said transmitter modulo-2 adds an inherent bit pattern to said HEC byte.

31. The system as set forth in claim 30, wherein said recipient establishes synchronization with respect to a cell with said HEC byte to which said inherent bit pattern has been modulo-2 added, to thereby identify said reference channel.

32. The system as set forth in claim 29, wherein said recipient selects a channel, based on the detected reference channel.

33. The system as set forth in claim 32, wherein said transmitter modulo-2 adds an inherent bit pattern to said HEC byte.

34. The system as set forth in claim 33, wherein said recipient establishes synchronization with respect to a cell with said HEC byte to which said inherent bit pattern has been modulo-2 added, to thereby identify said reference channel, and alters said inherent bit pattern to thereby select a desired channel.

35. A method of identifying a channel, to be used in a time-division multiplexing transmission system in which a plurality of channels is time-division multiplexed for transmission,
at least one of said channels stores asynchronous transfer mode (ATM) cell-base flow therein,
said method including:
the first step of deforming a HEC byte into an inherent form to thereby produce a reference channel, said HEC byte being formed in a cell header of a channel storing said ATM cell-base flow, and being indicative of data used for detecting and correcting an error in transmitted data, said first step being carried out by a transmitter;
the second step of time-division multiplexing channel signals including said reference signal, and producing a time-division multiplexed signal, said second step being carried out by said transmitter;
the third step of time-division separating said time-division multiplexed signal, said third step being carried out by a recipient; and
the fourth step of detecting a reference channel signal including said HEC byte, among a plurality of channel signals produced in said third step, said fourth step being carried out by said recipient.

36. The method as set forth in claim 35, wherein said first step includes the steps of:
synchronizing said channel signals with one another, based on said HEC byte; and
modulo-2 adding an inherent bit pattern to said HEC byte.

37. The method as set forth in claim 36, wherein said fourth step includes the steps of modulo-2 adding said inherent bit pattern to said HEC byte, and carrying out cyclic redundancy check (CRC) operation.

38. A method of identifying a channel, to be used in a time-division multiplexing transmission system in which a plurality of channels is time-division multiplexed for transmission,
at least one of said channels stores asynchronous transfer mode (ATM) cell-base flow therein,
said method including:
the first step of deforming a HEC byte into an inherent form to thereby produce a reference channel, said HEC byte being formed in a cell header of a channel storing said ATM cell-base flow, and being indicative of data used for detecting and correcting an error in transmitted data, said first step being to be carried out by a transmitter; and
the second step of detecting said reference channel signal including said HEC byte having been deformed into said inherent form, said second step being to be carried out by a recipient.

39. The method as set forth in claim 38, wherein said first step includes the step of modulo-2 adding an inherent bit pattern to said HEC byte.

40. The method as set forth in claim 39, wherein said second step includes the step of establishing synchronization with respect to a cell with said HEC byte to which said inherent bit pattern has been modulo-2 added, to thereby identify said reference channel.

41. The method as set forth in claim 38, wherein said second step includes the step of selecting a channel, based on the detected reference channel.

42. The method as set forth in claim 41, wherein said first step includes the step of modulo-2 adding an inherent bit pattern to said HEC byte.

43. The method as set forth in claim 42, wherein said second step includes the steps of:
establishing synchronization with respect to a cell with said HEC byte to which said inherent bit pattern has been modulo-2 added, to thereby identify said reference channel; and
altering said inherent bit pattern to thereby select a desired channel.

44. A communication system in which a plurality of subscriber terminals are connected to a terminal station unit through the same communication medium, and an access control to an ascending line directing toward said terminal station unit from said subscriber terminals is carried out in time-division multiplexing access,
characterized in that
said ascending line has a frame having a fixed length,
said frame is divided into a plurality of ascending sub-frames, and
each of said ascending sub-frames is comprised of a time-slot having a length inherent to each of said ascending sub-frames.

45. The communication system as set forth in claim 44, wherein said terminal station unit switches an apparatus for terminating an ascending signal, in every one of said ascending sub-frames.

46. The communication system as set forth in claim 44, wherein a time-slot located at a fixed position in said ascending sub-frame is assigned to each one of said subscriber terminals, and a synchronous transfer mode signal is stored in said time-slot in at least one of said ascending sub-frames.

47. The communication system as set forth in claim 46, wherein said time-slot has a length equal to a sum of a length of a signal transmitted by said synchronous transfer mode signal during one frame, and a length of a header associated with an ascending signal.

48. The communication system as set forth in claim 44, wherein a cell having a fixed length is stored into said time-slot in at least one of said ascending sub-frames.

49. The communication system as set forth in claim 44, wherein a packet having a variable length is stored into an area comprised of a plurality of time-slots connected to one another, in at least one of said ascending sub-frames.

50. The communication system as set forth in claim 44, wherein a descending line directing to said subscriber terminals from said terminal station unit has an descending line frame having a length equal to a length of said frame of said ascending line,
said descending line has access control areas for each one of said ascending sub-frames wherein assignment of a time-slot in each of said ascending sub-frames to said subscriber terminals is written in said access control area, and
said access control area is inserted into a predetermined position in said descending line frame which position corresponds to a position in said ascending line frame in which a head of an ascending sub-frame is positioned.

51. The communication system as set forth in claim 50, wherein an area other than said access control area is divided into a plurality of descending sub-frames in said descending line frame, and an area in which a position of an boundary between said descending sub-frames is written is inserted into said descending line frame in a predetermined position.

52. The communication system as set forth in claim 50, wherein said access control area is inserted into different positions in said descending line frames to thereby have each of the ascending sub-frames had different lengths from one another.

53. The communication system as set forth in claim 44, wherein a descending line directing to said subscriber terminals from said terminal station unit has a descending line frame having a length equal to a length of said frame of said ascending line, and
an ascending line control area is inserted into a predetermined position in said descending line frame,
said ascending line control area including an access control area in which assignment of a time-slot in each of said ascending sub-frames to said subscriber terminals is written, and an area in which a position of an boundary between said descending sub-frames in said ascending line is written.

54. The communication system as set forth in claim 53, wherein an area other than said ascending line control area is divided into a plurality of descending sub-frames in said descending line frame, and an area in which a position of an boundary between said descending sub-frames is written is inserted into said descending line frame in a predetermined position.

55. The communication system as set forth in claim 44, wherein a descending line directing to said subscriber terminals from said terminal station unit has a descending line frame having a length equal to a length of said frame of said ascending line,
said descending line frame has a sign rate equal to a sign rate of said ascending line multiplied by N wherein N is a positive integer,
said descending line is comprised of N channels each having a sign rate equal to a sign rate of said ascending line,
one of said N channels having a function of making access to said ascending line.
